# EUROPÄISCHE PATENTSCHRIFT

(11) **EP 3 610 251 B1**
(45) Veröffentlichungstag und Bekanntmachung des Hinweises auf die Patenterteilung: **20.03.2024**
(21) Anmeldenummer: 18717544.3
(22) Anmeldetag: 04.04.2018
(51) Int. Cl.: G01N 27/07, F01N 11/00, G01N 27/407, G01N 15/06, G01M 15/02

(54) **PARTIKELSENSOR**
PARTICULATE SENSOR
CAPTEUR DE PARTICULES

(30) Priorität: 12.04.2017 DE 102017206308
(43) Veröffentlichungstag der Anmeldung: 19.02.2020
(73) Patentinhaber: Robert Bosch GmbH, 70442 Stuttgart (DE)
(72) Erfinder: KOTYNEK, Milan, 37350 Olesnik (CZ); RUBAS, Vojtech, 37001 Budweis (CZ); SCHULTE AM HUELSE, Sebastian, 70191 Stuttgart (DE); ECKARDT, Martin, 70197 Stuttgart (DE)
(86) Internationale Anmeldenummer: PCT/EP2018/058527
(87) Internationale Veröffentlichungsnummer: WO 2018/188997

(56) Entgegenhaltungen:
- EP-A1- 0 978 721
- DE-A1-102006 035 058
- DE-A1-102016 102 597
- DE-T5-112015 003 067
- US-A1- 2008 016 946
- US-A1- 2016 011 159
- US-A1- 2017 045 435

## Beschreibung

### Stand der Technik

Beispielsweise aus der DE 40 34 072 A1 ist ein Abgassensor bekannt, der ein hülsenförmiges Sensorgehäuse, ein in dem Sensorgehäuse fixiertes Sensorelement, das abgasseitig über das Sensorgehäuse hinausragt, und ein hülsenförmiges Schutzrohr, das abgasseitig auf dem Sensorgehäuse befestigt ist, umfasst, wobei das Schutzrohr aus einer inneren Schutzhülse und einer äußeren Schutzhülse besteht, wobei die innere Schutzhülse einen abgasseitigen Endbereich des Sensorelements umgibt, wobei die äußere Schutzhülse die innere Schutzhülse zumindest bereichsweise umgibt, sodass zwischen äußerer Schutzhülse und innerer Schutzhülse ein ringförmiger Raum ausgebildet ist, wobei die äußere Schutzhülse und die innere Schutzhülse jeweils einen Gasaustritt und einen Gaseintritt aufweisen und eine Durchströmung des Schutzrohrs von dem Gaseintritt der äußeren Schutzhülse in den ringförmigen Raum, von dort durch den Gaseintritt der inneren Schutzhülse in das Innere der inneren Schutzhülse und von dort durch die Gasaustritte der äußeren und der inneren Schutzhülse erfolgt.

Die DE 10 2016 102 597 A1 offenbart ein System zur Erkennung von Feinstaub in einem Abgassystem eines Fahrzeuges umfassend ein erstes äußeres Rohr mit einer Vielzahl von Ansaugöffnungen auf einer stromaufwärtigen Oberfläche und ein zweites inneres Rohr mit einer Vielzahl von Ansaugöffnungen auf einer stromabwärtigen Oberfläche, und einen Feinstaubpartikel-Sensor, der innerhalb des zweiten inneren Rohrs positioniert ist.

### Offenbarung der Erfindung

Die vorliegende Erfindung betrifft einen Abgassensor wie in Anspruch 1 definiert. Bevorzugte Merkmale des Abgassensors sind in den abhängigen Ansprüchen beschrieben. Eine Verwendung des Abgassensors ist in Anspruch 10 definiert. Es handelt sich hierbei um einen Partikelsensor zum Nachweis der Konzentration fester Bestandteile eines Gases, beispielsweise der Konzentration von Ruß in einem Abgas einer Brennkraftmaschine.

Mit Hinblick auf Abgassensoren im Allgemeinen basiert die vorliegende Erfindung auf der Erkenntnis, dass die Sensitivität und Dynamik des Abgassensors grundsätzlich von seiner Orientierung in einer Abgasleitung beeinflusst wird, insbesondere hinsichtlich der Verdrehung des Abgassensors um seine Längsachse, welche vorzugsweise senkrecht zur Hauptströmungsrichtung in der Abgasleitung ausgerichtet ist. Es wurde erkannt, dass beispielsweise bei dem aus dem Stand der Technik bekannten Abgassensor Abgas bevorzugt durch die stromaufwärts angeordneten Gaseintrittsöffnungen der inneren und der äußere Schutzhülse in das Innere des Schutzrohrs eintritt und das Sensorelement bevorzugt von diesen Gaseintrittsöffnungen aus gerichtet anströmt. Bei anderen bereits bekannte Sensoren kann es auch zu dem gegenteiligen Effekt kommen, dass Abgas bevorzugt durch die stromabwärts angeordneten Gaseintrittsöffnungen der inneren und der äußere Schutzhülse in das Innere des Schutzrohrs eintritt und das Sensorelement bevorzugt von diesen Gaseintrittsöffnungen aus gerichtet anströmt. In beiden Fällen resultiert je nach Orientierung des Sensorelements relativ zu den stromaufwärts/ bzw. stromabwärts angeordneten Gaseintrittsöffnungen daher bei diesen Sensoren eine unterschiedliche Sensitivität und Dynamik des Abgassensors.

In einem weiteren Schritt wurde erkannt, dass eine ausreichende Drosselwirkung des Gaseintritts der inneren Schutzhülse, die gewährleistet ist, wenn der Gaseintritt der inneren Schutzhülse den kleinsten Strömungsquerschnitt bei der Durchströmung des Schutzrohrs bildet, zu einem relativen Unterdruck im Inneren der inneren Schutzhülse führt. Durch den sich vor dem Gaseintritts der inneren Schutzhülse ausbildenden Rückstau des Abgases homogenisiert sich die Abgasströmung im Ringraum und im Inneren der inneren Schutzhülse. Das Abgas wird durch den Gaseintritt der inneren Schutzhülse in das Innere der inneren Schutzhülse aufgrund des dort vorherrschenden Unterdrucks homogen eingesaugt. Eine Beeinflussung der Sensitivität und der Dynamik des Abgassensors von seiner Orientierung in einer Abgasleitung geht somit verloren, insbesondere erfolgt ein Einströmen des Abgases in das Innere der inneren Schutzhülse weitgehend unabhängig von einer Verdrehung des Abgassensors um seine Längsachse.

Die Genauigkeit des Abgassensors bei undefinierter orientierter Montage in einer Abgasleitung, insbesondere bei undefinierter Verdrehung des Abgassensors um seine Längsachse, ist auf diese Weise erhöht.

Mit Hinblick auf Partikelsensoren im Speziellen wurden zusätzliche technische Wirkungen erkannt. So basiert die vorliegende Erfindung insofern auch auf der Erkenntnis der Erfinder, dass eine Ablagerung von im Abgas enthaltenen Rußpartikeln auf dem Sensorelement besonders effizient möglich ist, wenn das Abgas mit möglichst hoher Strömungsgeschwindigkeit auf das Sensorelement gerichtet ist. Die im Abgas enthaltenen Rußpartikel gelangen so zu einem hohen Anteil sehr dicht an das Sensorelement, und scheiden sich mit hoher Rate darauf ab.

In einem weiteren Schritt wurde erkannt, dass die Strömungsgeschwindigkeit mit der das Abgas auf das Sensorelement gerichtet ist, in einem adäquaten Maß erhöht werden kann, indem der Gaseintritt der inneren Schutzhülse den kleinsten Strömungsquerschnitt bei der Durchströmung des Schutzrohrs bildet, insbesondere wenn der Gaseintritt auf axialer Höhe des Sensorelements angeordnet ist. Durch die so realisierte Drosselwirkung des Gaseintritts des inneren Schutzrohrs ist zwischen dem Inneren der inneren Schutzhülse und dem Ringraum eine Druckdifferenz maximiert, die dem Abgas eine wesentliche Beschleunigung in Richtung des Sensorelements verleiht.

In Summe kann durch die vorliegende Erfindung die Sensitivität eines Partikelsensors besonders erhöht werden.

Erfindungsgemäß weist der Abgassensor ein hülsenförmiges Sensorgehäuse auf, das insbesondere eine Durchgangsbohrung aufweist und insofern im Rahmen der Erfindung insbesondere eine Achse bzw. Längsachse und eine axiale Richtung definiert. Insbesondere wird im Rahmen der Erfindung eine Orientierung dieser Achse bzw. diese axiale Richtung als abgasseitig bezeichnet.

Das hülsenförmige Sensorgehäuse kann beispielsweise metallisch sein. Das hülsenförmige Sensorgehäuse kann beispielsweise ein Außengewinde und/oder ein Außensechskantprofil aufweisen. Der Abgassensor ist insbesondere auf diese oder insbesondere auf eine andere Weise in einer Abgasleitung insbesondere einer Brennkraftmaschine montierbar.

Erfindungsgemäß ist in dem Sensorgehäuse ein Sensorelement fixiert. Das Sensorelement ist insbesondere zumindest teilweise in der Durchgangsbohrung des Sensorgehäuses fixiert.

Erfindungsgemäß ragt das Sensorelement abgasseitig über das Sensorgehäuse hinaus. Dabei ist vorgesehen, dass ein sensitiver Bereich des Sensorelements, eine an sich bekannte Interdigital-Elektrodenstruktur, auf dem abgasseitig über das Sensorgehäuse hinausragenden Teil des Sensorelements angeordnet ist.

Der erfindungsgemäße Abgassensor weist ein hülsenförmiges Schutzrohr auf, das abgasseitig auf dem Sensorgehäuse befestigt ist, beispielsweise verschweißt, ist. Das Schutzrohr kann zum Beispiel von radial außen an einem Kragen des Sensorgehäuses aufgeschweißt sein. Das Schutzrohr kann beispielsweise metallisch sein, beispielsweise kann es aus mehreren Tiefziehteilen zusammengesetzt sein. Erfindungsgemäß besteht das Schutzrohr aus zwei Schutzhülsen, einer inneren Schutzhülse und einer äußeren Schutzhülse. Optional kann der Abgassensor eine weitere Schutzhülse aufweisen, die insbesondere mit dem Schutzrohr und/oder der inneren Schutzhülse und der äußeren Schutzhülse in Wechselwirkung tritt, beispielsweise diese zumindest teilweise umgibt. Auch mehrere, insbesondere derartige, weitere Schutzhülsen sind selbstverständlich möglich.

Die innere Schutzhülse und die äußere Schutzhülse weisen jede für sich die Grundform einer Hülse auf. Insbesondere besteht jeweils mindestens ein Durchgang in einer axialen Richtung der jeweiligen Hülse. Insbesondere weisen die innere Schutzhülse und die äußere Schutzhülse, jede für sich und/oder in ihrer Gesamtheit, eine ihrem Wesen nach rotationssymmetrische Grundform auf. Das hülsenförmige Gehäuse, die innere Schutzhülse und/oder die äußere Schutzhülse und insbesondere auch das Sensorelement können beispielsweise bezüglich ihrer Grundstruktur koaxial zueinander angeordnet sein.

Die innere Schutzhülse ist insbesondere abgasseitig auf dem Sensorgehäuse befestigt, beispielsweise verschweißt.

Die innere Schutzhülse umgibt erfindungsgemäß einen abgasseitigen Endbereich des Sensorelements, beispielsweise einen abgasseitigen Endbereich des Sensorelements, auf dem ein sensitiver Bereich des Sensorelements, insbesondere der oben bereits erläuterte sensitive Bereich, angeordnet ist.

Die äußere Schutzhülse ist insbesondere abgasseitig auf dem Sensorgehäuse befestigt, beispielsweise verschweißt, beispielsweise gemeinsam mit der inneren Schutzhülse durch eine einzige umlaufende Schweißnaht.

Die äußere Schutzhülse umgibt die innere Schutzhülse erfindungsgemäß zumindest bereichsweise. Insbesondere sind zumindest Teile der äußeren Schutzhülse radial und/oder abgasseitig axial außerhalb, insbesondere auf der vom Sensorelement aus gesehen gegenüberliegenden Seite, der inneren Schutzhülse angeordnet.

Es kann im Rahmen dieses erfindungsgemäßen Merkmals aber auch vorgesehen sein, dass die äußere Schutzhülse lediglich einen gehäusenahen Teil der inneren Schutzhülse in ihrem Inneren aufnimmt, während die innere Schutzhülse die äußere Schutzhülse durchdringt und diese axial in Abgasrichtung überragt.

Es kann auch vorgesehen sein, dass die äußere Schutzhülse die innere Schutzhülse sowohl radial als auch abgasseitig axial außerhalb, insbesondere auf der vom Sensorelement aus gesehen gegenüberliegenden Seite, der inneren Schutzhülse angeordnet ist.

Erfindungsgemäß ist zwischen äußerer Schutzhülse und innerer Schutzhülse ein ringförmiger Raum ausgebildet. Unter einem ringförmigen Raum wird insbesondere ein Zwischenraum zwischen zwei, insbesondere konzentrischen, zumindest teilweise ineinander angeordneten Hülsen, beispielsweise Zylindern, verstanden. Es kann sich beispielsweise um einen hohlzylinderförmigen Raum handeln. Insbesondere ist die Projektion des ringförmigen Raums in axialer Richtung eine ringförmige Fläche, die insbesondere von zwei konzentrischen Kreisen begrenzt wird. Die Radien der konzentrischen Kreise können zum Beispiel ein Verhältnis bilden, das zwischen 0,35 und 0,7 liegt.

Erfindungsgemäß weist die äußere Schutzhülse und die innere Schutzhülse jeweils einen Gasaustritt und einen Gaseintritt auf. Es sind ein Gaseintritt der äußeren Schutzhülse und ein Gaseintritt der inneren Schutzhülse und ein Gasaustritt der äußeren Schutzhülse und ein Gasaustritt der inneren Schutzhülse vorgesehen.

Ein derartiger Gaseintritt bzw. ein derartiger Gasaustritt der betreffenden Schutzhülse kann insbesondere mindestens eine Öffnung in der betreffenden Schutzhülse sein, also jeweils genau eine Öffnung oder jeweils mehrere Öffnungen, wobei die Öffnung oder die Öffnungen insbesondere einen makroskopischen Gasdurchgang von der einer Außenseite der betreffenden Hülse zu einer Innenseite der betreffenden Hülse darstellen. Im Fall mehrerer Öffnungen gewähren diese Öffnungen parallel zueinander, einen makroskopischen Gasdurchgang von einer Außenseite der betreffenden Hülse zu einer Innenseite der betreffenden Hülse. Die Öffnungen können grundsätzlich in beliebige Richtungen weisen, beispielsweise in die axiale Richtung oder in die radiale Richtung.

Der Gaseintritt der äußeren Schutzhülse kann beispielsweise aus einer Vielzahl regelmäßig entlang des Umfangs der äußeren Schutzhülse angeordneten Öffnungen bestehen. Der Gaseintritt der inneren Schutzhülse kann beispielsweise aus einer Vielzahl regelmäßig entlang des Umfangs der inneren Schutzhülse angeordneten Öffnungen bestehen. Der Gasaustritt der äußeren Schutzhülse kann beispielsweise aus einer zentralen abgasseitigen Öffnung bestehen. Der Gasaustritt der inneren Schutzhülse kann beispielsweise aus einer zentralen abgasseitigen Öffnung bestehen oder aus einer Vielzahl von Öffnungen bestehen, die auf einem auch Prallplatte genannten abgasseitigen Boden der inneren Schutzhülse angeordnet sind. Gaseintritten und Gasaustritten sind im Rahmen dieser Erfindung Strömungsquerschnitte zugeordnet. Im Fall einer einzigen Öffnung ist das der geometrische Querschnitt der Öffnung, im Fall mehrerer Öffnungen ist das die Summe der geometrischen Querschnitte der betreffenden Öffnungen.

Insbesondere im Fall des Vorliegens eines in axialer Richtung weisenden negativen Gradienten des statischen Drucks (auch: Druckgradienten) im Abgas, beispielsweise, wenn der statische Druck am abgasseitigen axialen Ende des Schutzrohrs kleiner ist als an dem vom Abgas abgewandten axialen Ende des Schutzrohrs, ist insbesondere vorgesehen, dass das Schutzrohr, insbesondere zwingend, wie folgt eine Durchströmung erfährt: Von dem Gaseintritt der äußeren Schutzhülse in den ringförmigen Raum, von dort durch den Gaseintritt der inneren Schutzhülse in das Innere der inneren Schutzhülse und von dort nacheinander durch die Gasaustritte der äußeren und der inneren Schutzhülse, also entweder zuerst durch den Gasaustritt der inneren Schutzhülse und danach durch den Gasaustritt der äußeren Schutzhülse oder zuerst durch den Gasaustritt der äußeren Schutzhülse und danach durch den Gasaustritt der inneren Schutzhülse. Insbesondere in diesem Kontext ergibt sich für erfindungsgemäße Sensoren die Zuordnung der Öffnungen in den Schutzhülsen zu Gaseintritten und Gasaustritten.

Unter "zwingend" ist dabei insbesondere zu verstehen, dass eine Durchströmung in anderer Reihenfolge oder über andere Pfade konstruktiv ausgeschlossen ist. Insbesondere ist vorgesehen, dass der Ringraum mit einem Bereich außerhalb der äußeren Schutzhülse lediglich über den Gaseintritt der äußeren Schutzhülse unmittelbar kommuniziert und/oder der Ringraum mit dem Inneren der inneren Schutzhülse lediglich über den Gaseintritt der inneren Schutzhülse unmittelbar kommuniziert und/oder dass das Innere der inneren Schutzhülse mit einem Bereich außerhalb des Abgassensors durch die Gasaustritte der äußeren und der inneren Schutzhülse kommuniziert, ohne zuvor nochmals mit dem Ringraum zu kommunizieren.

Mit anderen Worten: Insbesondere erfolgt die Durchströmung des Schutzrohrs hinsichtlich der Gaseintritte und Gasaustritte, also abgesehen von der parallelen Durchquerung mehrerer zu einem Gaseintritt und zu einem Gasaustritte gehörenden Öffnungen, aufgrund der Struktur des Schutzrohrs insbesondere lediglich in der so definierten Sequenz auf einem insbesondere linearen und insbesondere unverzweigten Pfad.

Im Fall des Vorliegens eines in axialer Richtung weisenden negativen Gradienten des statischen Drucks im Abgas, beispielsweise, wenn der statische Druck am abgasseitigen axialen Ende des Schutzrohrs kleiner ist als an dem vom Abgas abgewandten axialen Ende des Schutzrohrs, kann die Durchströmung des Schutzrohrs insbesondere davon angetrieben sein, dass der Gasaustritt der inneren oder äußeren Schutzhülse abgasseitig des Gaseintritts der äußeren Schutzhülse angeordnet ist, also, insbesondere bei Montage des Abgassensors an der Wandung einer Abgasleitung, an einem Ort mit geringerem statischen Druck. Auch die Strömungsbeeinflussung durch den Abgassensor selbst, insbesondere durch das Schutzrohr selbst, insbesondere eine Abbremsung der Strömung im Bereich des Gaseintritts der äußeren Schutzhülse, kann diesen Effekt herbeiführen bzw. verstärken.

Der Gaseintritt der inneren Schutzhülse ist insbesondere auf axialer Höhe des Sensorelements angeordnet. Insbesondere kann der Gaseintritt der inneren Schutzhülse auf axialer Höhe eines sensitiven Bereichs des Sensorelements, insbesondere des oben bereits erläuterten sensitiven Bereichs, angeordnet sein. In Zusammenwirkung mit der Drosselwirkung am Gaseintritt des inneren Schutzrohrs erfolgt eine wesentliche Beschleunigung des Abgases in Richtung des Sensorelements. Beispielsweise im angesprochenen Fall eines Partikelsensors erhöhen sich die Ablagerung von Partikeln auf dem Sensorelement und damit die Sensitivität des Partikelsensors, wie oben erläutert.

Alternativ kann der Gaseintritt der inneren Schutzhülse insbesondere auf der abgasabgewandten axialen Seite eines sensitiven Bereichs des Sensorelements, insbesondere des oben bereits erläuterten sensitiven Bereichs, angeordnet sein. Insbesondere in diesem Fall kann vorgesehen sein, dass das in das Innere der inneren Schutzhülse einströmende Gas durch ein Umlenkelement oder mehrere Umlenkelemente auf einen sensitiven Bereich des Sensorelements, insbesondere auf den oben bereits erläuterten sensitiven Bereich, gerichtet wird.

Erfindungsgemäß bildet der Gaseintritt der inneren Schutzhülse den kleinsten Strömungsquerschnitt bei der Durchströmung des Schutzrohrs. Der Strömungsquerschnitt des Gaseintritts ist also kleiner als alle anderen im Schutzrohr durchströmten Querschnitte, insbesondere jeweils kleiner als der Strömungsquerschnitt des Gasaustritts der äußeren Schutzhülse, der Strömungsquerschnitt des Gaseintritts der äußeren Schutzhülse und der Strömungsquerschnitt des Gasaustritts der inneren Schutzhülse. Der Strömungsquerschnitt des Gaseintritts ist also auch kleiner als ein dem Ringraum und dem Inneren der inneren Schutzhülse und einem ggf. vorhandenen Stirnraum (siehe unten) zugeordneter Strömungsquerschnitt.

Es ist insbesondere vorgesehen, dass der Gaseintritt der inneren Schutzhülse einen Strömungsquerschnitt aufweist, der 10% bis 95%, insbesondere 25% bis 50% oder 50% bis 80%, des Strömungsquerschnitts des Gasaustritts der inneren Schutzhülse beträgt, und/oder 10% bis 95%, insbesondere 25% bis 50% oder 50% bis 80%, des Strömungsquerschnitts des Gasaustritts der äußeren Schutzhülse beträgt.

Im Rahmen der Erfindung sind insbesondere zwei Gruppen von Ausführungsformen möglich.

Die erste Gruppe zeichnet sich dadurch aus, dass der Gasaustritt der äußeren Schutzhülse zumindest eine Gasaustrittsöffnung aufweist, in der die innere Schutzhülse fixiert ist und durch die hindurch die innere Schutzhülse abgasseitig über die äußere Schutzhülse übersteht, und der Gasaustritt der inneren Schutzhülse das Innere der inneren Schutzhülse mit einem Bereich außerhalb des Abgassensors unmittelbar verbindet.

Bei der Durchströmung des Schutzrohrs tritt die Strömung also insbesondere aus dem Inneren der inneren Schutzhülse unmittelbar in den Bereich außerhalb des Abgassensors über, ohne nochmals von der äußeren Schutzhülse geführt zu werden. Die Gasaustrittsöffnung der äußeren Schutzhülse kommt hierbei nicht mehr unmittelbar mit der Strömung in Berührung, sie nimmt lediglich die innere Schutzhülse auf, in welcher sich die Strömung in Richtung auf den Gasaustritt des inneren Schutzrohrs zu bewegt; sie ist gleichwohl eine Gasaustrittsöffnung und ein Gasaustritt der äußere Schutzhülse im Sinne der Erfindung.

Die zweite Gruppe zeichnet sich dadurch aus, dass die äußere Schutzhülse axial in abgasseitiger Richtung über die innere Schutzhülse übersteht und zwischen der äußeren Schutzhülse und der inneren Schutzhülse ein von dem ringförmigen Raum getrennter Stirnraum ausgebildet ist, und der Gasaustritt der inneren Schutzhülse das Innere der inneren Schutzhülse mit dem Stirnraum verbindet und der Gasaustritt der äußeren Schutzhülse den Stirnraum mit einem Bereich außerhalb des Abgassensors verbindet.

Bei der Durchströmung des Schutzrohrs gelangt die Strömung also insbesondere aus dem Inneren der inneren Schutzhülse zunächst durch den Gasaustritt der inneren Schutzhülse in den vom Ringraum separaten Stirnraum und gelangt von dort insbesondere über die Austrittsöffnung der äußeren Schutzhülse in einen Bereich außerhalb des Abgassensors.

Die innere Schutzhülse kann dabei abgasseitig weitgehend offen sein, so dass der Gasaustritt der inneren Schutzhülse aus einer zentralen Öffnung mit maximaler Querschnittsfläche besteht. Alternativ kann die innere Schutzhülse abgasseitig von einer Prallplatte verschlossen sein, die eine oder mehrerer Öffnungen aufweist, insbesondere mehrere auf einem Kranz außermittig angeordnete Öffnungen aufweist.

Eine Weiterbildung der Erfindung im Allgemeinen sieht vor, dass der Gaseintritt der äußeren Schutzhülse mindestens eine Gaseintrittsöffnung aufweist, die mit mindestens einem Drallelement versehen ist, beispielsweise eine Vielzahl von in regemäßigen Abständen auf dem Umfang der äußeren Schutzhülse angeordneten Öffnungen, die jeweils mit einem Drallelement versehen ist. Durch das Drallelement bzw. durch die Drallelemente wird das in den ringförmigen Raum eintretende Abgas so ablenkt, dass es innerhalb des ringförmigen Raums um die innere Schutzhülse rotiert. Eine derartige Weiterbildung hat den Vorteil, dass die Funktion des Abgassensors, insbesondere seine Sensitivität, noch weitgehender unabhängig davon wird, in welcher Winkellage (insbesondere unter welchem Drehwinkel um seine Längsachse) der Abgassensor in einer Abgasströmung montiert wird und ferner weitgehend unabhängig davon wird, in welcher Winkellage die innere und die äußere Schutzhülse zueinander verbaut werden, selbst wenn der Gaseintritt der inneren Schutzhülse lediglich Öffnungen aufweist, die nicht gleichmäßig über seinen Umfang verteilt sind.

Eine zusätzliche oder alternative Weiterbildung der Erfindung sieht vor, dass der Gaseintritt der inneren Schutzhülse mindestens eine Gaseintrittsöffnung aufweist, die mindestens ein Umlenkelement aufweist, das ein in den ringförmigen Raum eintretendes Abgas in Richtung des Gasaustritts der inneren Schutzhülse hin ablenkt. Beispielsweise kann der Gaseintritt der inneren Schutzhülse eine Vielzahl von Gaseintrittsöffnungen aufweisen, die in regemäßigen Abständen auf dem Umfang der inneren Schutzhülse angeordnet sind und die die jeweils ein Umlenkelement aufweisen, das ein in den ringförmigen Raum eintretendes Abgas in Richtung des Gasaustritts der inneren Schutzhülse hin ablenkt. Eine derartige Weiterbildung hat die technische Wirkung, dass das Abgas zwar immer noch mit hoher Geschwindigkeit, allerdings mit vermindertem Normalgeschwindigkeitsanteil das Sensorelement erreicht. Untersuchungen der Erfinder zeigten, dass sich in dieser Konfiguration die Zuverlässigkeit des Sensorbetriebs verbessern ließ. Mit Hinblick auf Partikelsensoren beruht dies unter anderem darauf, dass ein verminderter Normalgeschwindigkeitsanteil in gewissen Betriebsbedingungen verhindert, dass an dem Sensorelement bereits anhaftende Rußpartikel und Rußpartikelstrukturen, beispielsweise Rußbrücken zwischen Interdigitalelektroden, wieder abgelöst werden können, und somit für eine Messung nicht mehr zur Verfügung stehen.

Eine zusätzliche oder alternative Weiterbildung der Erfindung sieht vor, dass der Gaseintritt der inneren Schutzhülse aus einer Vielzahl von Öffnungen besteht, die sehr klein sind. So können beispielsweise mindestens 10 oder sogar mindestens 30 Öffnungen vorgesehen sein, wobei die Querschnittsfläche einer einzelnen dieser Öffnungen jeweils nicht mehr als 1 mm² oder sogar nicht mehr als 0,3 mm² aufweist. Die Öffnungen können beispielsweise in regemäßigen Abständen auf dem Umfang der inneren Schutzhülse nebeneinander oder in zwei, drei, vier oder mehr umlaufenden Ringen angeordnet sein. Der Vorteil im Vergleich zu größeren Öffnungen besteht darin, dass das Sensorelement besser vor Kondensat bzw. Fremdpartikeln (z.B. Metallpartikeln) geschützt wird. Die Mindestgröße der Öffnungen ergibt sich draus, dass der Gaseintritt des inneren Schutzrohrs auch in Anwesenheit von Ruß im Abgas nicht verstopfen soll. Beispielsweise sollte die Querschnittsfläche einer jeden Öffnung nicht kleiner als 0,06mm² sein.

Es kann insbesondere vorgesehen sein, dass jede einzelne Gaseintrittsöffnung der inneren Schutzhülse einen Strömungsquerschnitt aufweist, dessen Quadratwurzel kleiner als 1/18 oder sogar kleiner als 1/25 der Längserstreckung des Schutzrohrs ist und/oder kleiner als 1/35 oder sogar kleiner als 1/25 der Längserstreckung des Sensorelements ist.

Die Sensitivität des Abgassensors kann wesentlich dadurch erhöht werden, dass der Gaseintritt des inneren Schutzrohrs und ein sensitiver Bereich des Sensorelements, beispielsweise der oben erläuterte sensitive Bereich, zueinander ausgerichtet sind, insbesondere einander gegenüber liegen, denn in diesem Fall strömt das in das Innere der inneren Schutzhülse eintretende Abgas den sensitiven Bereich stets unmittelbar an.

Beispielsweise kann dies dadurch erfolgen, dass lediglich auf einem radialen und/oder axialen Teilbereich des Sensorelements der sensitive Bereich angeordnet ist, und der Gaseintritt der inneren Schutzhülse lediglich auf einem radialen und/oder axialen Teilbereich der inneren Schutzhülse angeordnet ist und der sensitive Bereich und der Gaseintritt der inneren Schutzhülse einander gegenüberliegend Das Sensorelement ist als planares Sensorelement ausgebildet und lediglich auf einem Teil einer Seitenfläche des Sensorelements ist der sensitive Bereich angeordnet, und der Gaseintritt der inneren Schutzhülse lediglich auf einem radialen und/oder axialen Teilbereich der inneren Schutzhülse angeordnet ist und der sensitive Bereich und der Gaseintritt der inneren Schutzhülse einander gegenüberliegend sind. In beiden Fällen kann beispielsweise der Gaseintritt der inneren Schutzhülse aus einer Vielzahl von Öffnungen bestehen, die in axialer Richtung übereinander angeordnet sind, insbesondere lediglich in einer Reihe oder lediglich in zwei Reihen.

In axiale Richtung weisende negative Gradienten des statische Drucks im Abgas, wenn also beispielsweise der statische Druck am abgasseitigen axialen Ende des Schutzrohrs größer ist als an dem vom Abgas abgewandten axialen Ende des Schutzrohrs, treten in einer Abgasleitung einer Brennkraftmaschine beispielsweise auf, wenn der Abgassensor in der Abgasleitung so montiert ist, dass ein Querschnitt der Abgasleitung einen zentraleren Bereich und einen periphereren Bereich aufweist, wobei eine Strömungsgeschwindigkeit des Abgases in der Abgasleitung in dem zentraleren Bereich grundsätzlich höher ist als in dem periphereren Bereich und wobei der Gaseintritt der äußeren Schutzhülse in dem periphereren Bereich angeordnet ist und der Gasaustritt der inneren oder äußeren Schutzhülse in dem zentraleren Bereich angeordnet ist, da in diesem Fall der statische Druck lokal umso geringer ist, je höher die Strömungsgeschwindigkeit ist.

### Kurze Beschreibung der Zeichnung

Figur 1a zeigt einen Querschnitt entlang der Längsachse des Abgassensors gemäß einem ersten Ausführbeispiel
Figur 1b zeigt einen abgasseitigen Endbereich des Sensorelements des Abgassensors aus Figur 1a in Aufsicht
Figur 2 zeigt einen Querschnitt entlang der Längsachse des Abgassensors gemäß einem zweiten Ausführbeispiel
Figur 3a zeigt einen Querschnitt entlang der Längsachse des Abgassensors gemäß einem dritten Ausführbeispiel
Die Figur 3b zeigt die innere Schutzhülse des Abgassensors aus Figur 3a mit Blickrichtung von rechts nach links entlang der Längsachse LA des Sensors.
Figur 4 zeigt einen Querschnitt entlang der Längsachse des Abgassensors gemäß einem vierten Ausführbeispiel
Figur 5 zeigt einen Querschnitt entlang der Längsachse des Abgassensors gemäß einem fünften Ausführbeispiel
Figur 6 zeigt einen Querschnitt entlang der Längsachse des Abgassensors gemäß einem sechsten Ausführbeispiel

### Ausführungsformen

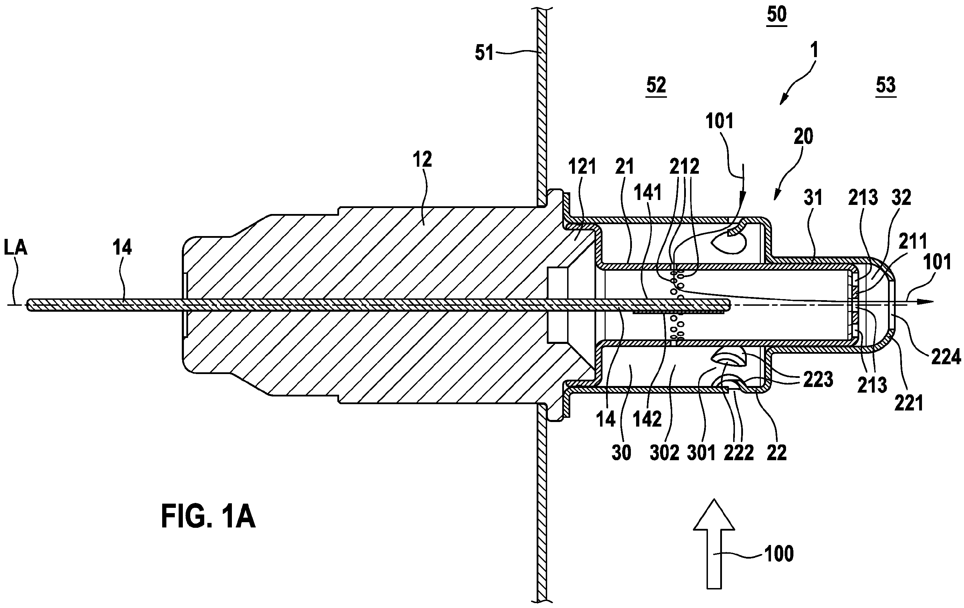

Die Figur 1a zeigt einen Querschnitt entlang der Längsachse LA des Abgassensors 1 gemäß einem ersten Ausführbeispiel. Der Abgassensor 1 weist ein hülsenförmiges Sensorgehäuse 12 auf, in dessen Durchgangsbohrung ein keramisches Sensorelement 14 fixiert ist. Das keramische Sensorelement 14 ragt sowohl auf der dem Abgas zugewandten Seite des Sensorgehäuses 12 (in Figur 1a rechts) als auch auf der dem Abgas abgewandten Seite des Sensorgehäuses 12 (in Figur 1a links) über Sensorgehäuse 12 hinaus.

An einem in Abgasrichtung weisenden umlaufenden Kragen 121 des Sensorgehäuses 12 ist ein hülsenförmiges, metallisches Schutzrohr 20 angeschweißt. Das Schutzrohr 20 besteht aus einer inneren Schutzhülse 21 und einer äußeren Schutzhülse 22. Die innere Schutzhülse 21 umgibt einen abgasseitigen Endbereich 141 des Sensorelements 14 mit radialem und axialem Abstand.

Die äußere Schutzhülse 22 umgibt die innere Schutzhülse 21 derart, dass es auf axialer Höhe des Kragens 121 an dem inneren Schutzrohr 21 anliegt und zusammen mit diesem an dem Kragen 121 mittels einer umlaufenden Schweißnaht angeschweißt ist, dass ferner abgasseitig des Kragens 121 zwischen äußerer Schutzhülse 22 und innerer Schutzhülse 21 ein ringförmiger Raum 30 ausgebildet ist, dass ferner abgasseitig des ringförmigen Raums 30 ein Anlagebereich 31 ausgebildet ist, in dem die innere Schutzhülse 21 mit ihrer Außenfläche an der Innenfläche der äußeren Schutzhülse 22 vollumfänglich anliegt und dass ferner abgasseitig des Anlagebereichs 31 ein Stirnraum 32 ausgebildet ist, der radial von der äußeren Schutzhülse 22 begrenzt wird, auf der dem Abgas abgewandten Seite von einem als Prallplatte ausgebildeten Boden 211 der inneren Schutzhülse 21 begrenzt wird und auf der dem Abgas zugewandten Seite von einem Boden 221 der äußeren Schutzhülse 22 begrenzt wird.

Die äußere Schutzhülse 22 weist beispielsweise acht Gaseintrittsöffnungen 222 auf, die mit gleichen Abständen entlang des Umfangs der äußeren Schutzhülse 22 auf axialer Höhe eines dem Abgas zugewandten Endbereichs 301 des ringförmigen Raums 30 angeordnet sind. Im Beispiel weisen die Gaseintrittsöffnungen 222 jeweils ein Drallelement 223 auf, das als Drallklappe ausgebildet ist und dem in den ringförmigen Raum 30 einströmenden Gas ein zum Sensorgehäuse 12 gerichteten Impuls und einen in Richtung der Längsachse LA des Sensors gerichteten Drehimpuls verleiht, sodass das Abgas innerhalb des ringförmigen Raums 30 um die innere Schutzhülse 21 rotiert. In einer Variante dieser Ausführungsform kann auf Drallelemente 223 verzichtet werden.

Die äußere Schutzhülse 22 weist ferner an dem Boden 221 eine relativ große Gasaustrittsöffnung 224 auf. In einer Variante kann die Gasaustrittsöffnung 224 sogar derart vergrößert sein, dass der Boden 221 ganz oder weitgehend entfällt.

Die innere Schutzhülse 21 weist beispielsweise 32 vergleichsweise kleine Gaseintrittsöffnungen 212 auf, die mit gleichen Abständen entlang des Umfangs der inneren Schutzhülse 21 in zwei Reihen auf axialer Höhe eines in axialer Richtung etwa mittigen Bereichs 302 des ringförmigen Raums 30 angeordnet sind. Die Gaseintrittsöffnungen 212 sind ferner auf axialer Höhe des Sensorelements 14 angeordnet.

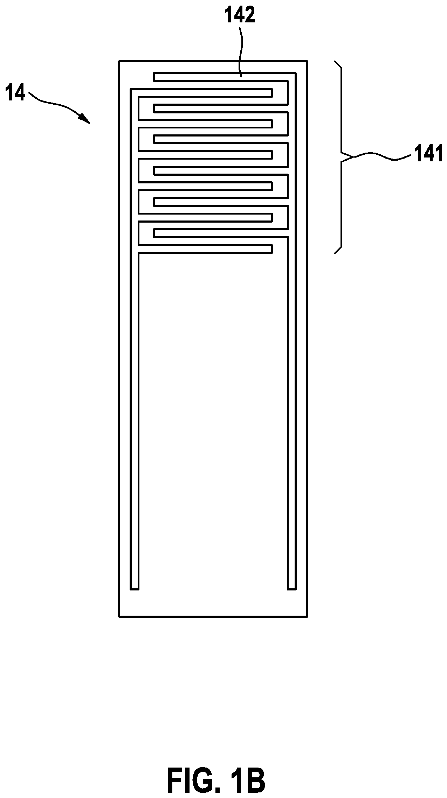

Genauer sind die Gaseintrittsöffnungen 212 auf axialer Höhe eines sensitiven Bereichs des Sensorelements 14 angeordnet. Der sensitive Bereich des Sensorelements 14 ist beispielsweise eine Interdigitalelektroden-Struktur 142 (siehe auch Fig. 1b), insofern handelt es sich bei dem Abgassensor um einen Partikelsensor zum Nachweis von Ruß im Abgas einer Brennkraftmaschine. Alternativ könnte der sensitive Bereich auch eine Elektrode einer elektrochemischen Zelle und/oder eine in das Innere des Sensorelements führende Öffnung beispielsweise einer Breitband-Lambdasonde oder eines NOx-Sensors sein.

Die innere Schutzhülse 21 weist auf ihrem Boden 211 einen Kranz von acht außermittig angeordneten Gasaustrittsöffnungen 213 auf. Zusätzlich ist eine weitere mittige Gasaustrittsöffnung 213 auf dem Boden 211 der inneren Schutzhülse 21 vorgesehen. In einer Variante kann letztere auch entfallen.

Die 32 Gaseintrittsöffnungen 212 der inneren Schutzhülse 21 sind im Beispiel kreisrund und haben einen Durchmesser von 0,5mm. Der Strömungsquerschnitt des Gaseintritts der inneren Schutzhülse beträgt also 6mm². Der Strömungsquerschnitt des Gasaustritts der inneren Schutzhülse 21 beträgt im Beispiel 10mm². Der Strömungsquerschnitt des Gasaustritts der äußeren Schutzhülse 22 beträgt im Beispiel 14mm². Der Strömungsquerschnitt des Gaseintritts der äußeren Schutzhülse 22 beträgt im Beispiel 10mm². Die Länge des Sensorelements 14 beträgt ca. 55mm, die Längserstreckung des Schutzrohrs 20 beträgt ca. 28mm. Der Gaseintritt der inneren Schutzhülse 21 bildet somit den kleinsten Strömungsquerschnitt bei der Durchströmung des Schutzrohrs 20, woraus die eingangs erläuterten positiven Wirkungen resultieren.

In einer Variante kann der Durchmesser der Gaseintrittsöffnungen 212 der inneren Schutzhülse 21 auf 0,4mm oder sogar auf 0,3mm verringert werden. In Alternativen hierzu können auch lediglich acht insbesondere kreisrunde Gaseintrittsöffnungen 212 der inneren Schutzhülse 21 vorgesehen sein, deren Durchmesser 1 mm oder 0,8mm oder 0,6mm betragen und die in einer Reihe gleichmäßig längs des Umfangs des inneren Schutzrohrs 21 angeordnet sind. Die Figur 1b zeigt eine Aufsicht auf das Sensorelement 14 in der Perspektive von unten nach oben in der Figur 1a. Das Sensorelement 14 ist planar ausgebildet und auf der Oberfläche des Sensorelements 14 ist in einem abgasseitigen Endbereich 141 eine Interdigitalelektroden-Struktur 142 angeordnet, die den sensitiven Bereich des Sensorelements 14 bildet.

Der Abgassensor 1 kann so in der Wandung 51 einer Abgasleitung 50 einer Brennkraftmaschine montiert werden, dass in einem Querschnitt der Abgasleitung 50 gesehen der Gaseintritt der äußeren Schutzhülse 22 in einem Randbereich 52 der Abgasleitung angeordnet ist, während der Gasaustritt der äußeren Schutzhülse 22 in einem mittigen Bereich 53 der Abgasleitung angeordnet ist, siehe Figur 1a. Abgas durchströmt die Abgasleitung 50 im Wesentlichen senkrecht zur Längsachse LA des Abgassensors 1, parallel zur Zeichenebene der Figur 1a, in Richtung des Doppelpfeils 100. Da die Strömungsgeschwindigkeit in der Abgasleitung 50 in dem mittigen Bereich 53 der Abgasleitung höher ist als in dem Randbereich 52 der Abgasleitung, ist der statische Druck an der Gasaustrittsöffnung 224 der äußeren Schutzhülse 22 geringer als an den Gaseintrittsöffnungen 222 der äußeren Schutzhülse 22. Infolgedessen strömt Abgas durch die Gaseintrittsöffnungen 222 der äußeren Schutzhülse 22 in den ringförmigen Raum 30, von dort durch die Gaseintrittsöffnungen 212 des inneren Schutzhülse 21 in das Innere der inneren Schutzhülse 21, wo es mit dem sensitiven Bereich des Sensorelements 14 wechselwirkt. Nachfolgend gelangt das Abgas durch die Gasaustrittsöffnungen 213 der inneren Schutzhülse 21 in den Stirnraum 32 und von dort durch die Gasaustrittsöffnung 224 der äußeren Schutzhülse 22. Diese Durchströmung ist in der Figur 1a durch die Pfeil-Linie 101 kenntlich gemacht.

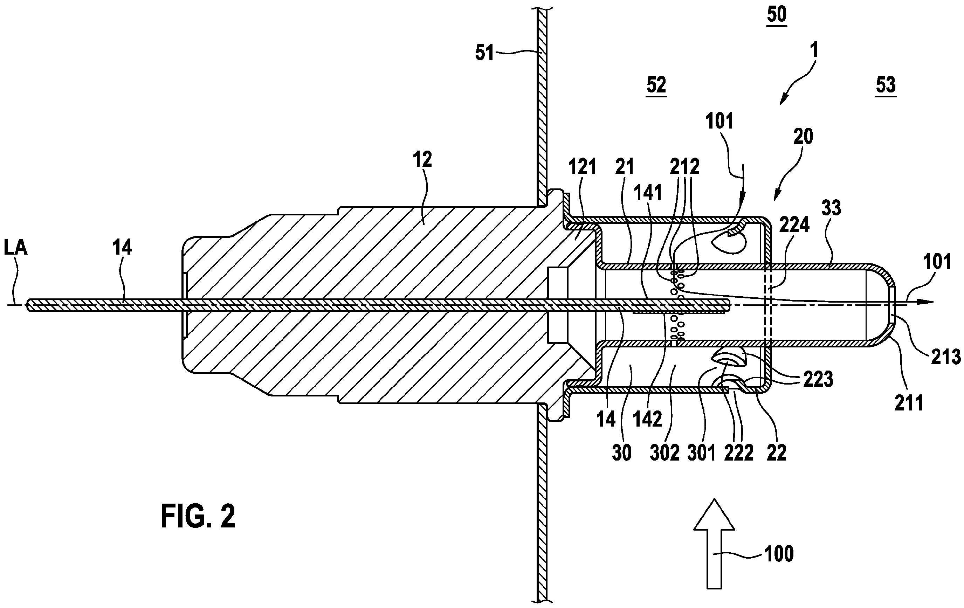

Die Figur 2 zeigt einen Querschnitt entlang der Längsachse LA des Abgassensors 1 gemäß einem zweiten Ausführbeispiel. Der Abgassensor 1 weist ein hülsenförmiges Sensorgehäuse 12 auf, in dessen Durchgangsbohrung ein keramisches Sensorelement 14 fixiert ist. Das keramische Sensorelement 14 ragt sowohl auf der dem Abgas zugewandten Seite des Sensorgehäuses 12 (in Figur 2 rechts) als auch auf der dem Abgas abgewandten Seite des Sensorgehäuses 12 (in Figur 2 links) über das Sensorgehäuse 12 hinaus.

An einem in Abgasrichtung weisenden umlaufenden Kragen 121 des Sensorgehäuses 12 ist ein hülsenförmiges, metallisches Schutzrohr 20 angeschweißt. Das Schutzrohr 20 besteht aus einer inneren Schutzhülse 21 und einer äußeren Schutzhülse 22. Die innere Schutzhülse 21 umgibt einen abgasseitigen Endbereich 141 des Sensorelements 14 mit radialem und axialem Abstand.

Die äußere Schutzhülse 22 umgibt die innere Schutzhülse 21 derart, dass es auf axialer Höhe des Kragens 121 an dem inneren Schutzrohr 21 anliegt und zusammen mit diesem an dem Kragen 121 mittels einer umlaufenden Schweißnaht angeschweißt ist und dass ferner abgasseitig des Kragens 121 zwischen äußerer Schutzhülse 22 und innerer Schutzhülse 21 ein ringförmiger Raum 30 ausgebildet ist. Abgasseitig des ringförmigen Raums 30 weist die äußere Schutzhülse 22 eine relativ große zentrale Gasaustrittsöffnung 224 auf, in der die innere Schutzhülse 21 fixiert ist und durch die hindurch die innere Schutzhülse 21 abgasseitig über die äußere Schutzhülse 22 in einem Überstehbereich 33 übersteht. Die innere Schutzhülse 21 ist spaltfrei, also dicht, in der Gasaustrittsöffnung 224 der äußeren Schutzhülse 22 fixiert, insbesondere eingepresst. Der Überstehbereich 33 endet abgasseitig mit einem Boden 211 der inneren Schutzhülse 21.

Die äußere Schutzhülse 22 weist beispielsweise acht Gaseintrittsöffnungen 222 auf, die mit gleichen Abständen entlang des Umfangs der äußeren Schutzhülse 22 auf axialer Höhe eines dem Abgas zugewandten Endbereichs 301 des ringförmigen Raums 30 angeordnet sind. Im Beispiel weisen die Gaseintrittsöffnungen 222 jeweils ein Drallelement 223 auf, das als Drallklappe ausgebildet ist und dem in den ringförmigen Raum 30 einströmenden Gas ein zum Sensorgehäuse 12 gerichteten Impuls und einen in Richtung der Längsachse LA des Sensors gerichteten Drehimpuls verleiht, sodass das Abgas innerhalb des ringförmigen Raums 30 um die innere Schutzhülse 21 rotiert. In einer Variante dieser Ausführungsform kann auf Drallelemente 223 verzichtet werden.

Die innere Schutzhülse 21 weist beispielsweise 32 vergleichsweise kleine Gaseintrittsöffnungen 212 auf, die mit gleichen Abständen entlang des Umfangs der inneren Schutzhülse 21 in zwei Reihen auf axialer Höhe eines in axialer Richtung etwa mittigen Bereichs 302 des ringförmigen Raums 30 angeordnet sind. Die Gaseintrittsöffnungen 212 sind ferner auf axialer Höhe des Sensorelements 14 angeordnet.

Genauer sind die Gaseintrittsöffnungen 212 auf axialer Höhe eines sensitiven Bereichs des Sensorelements 14 angeordnet. Der sensitive Bereich des Sensorelements 14 ist beispielsweise eine Interdigitalelektroden-Struktur 142 (siehe auch Fig. 1b), insofern handelt es sich bei dem Abgassensor um einen Partikelsensor zum Nachweis von Ruß im Abgas einer Brennkraftmaschine. Alternativ könnte der sensitive Bereich auch eine Elektrode einer elektrochemischen Zelle und/oder eine in das Innere des Sensorelements führende Öffnung beispielsweise einer Breitband-Lambdasonde oder eines NOx-Sensors sein.

Die innere Schutzhülse 21 weist auf ihrem Boden 211 eine zentrale relativ große Gasaustrittsöffnung 213 auf.

Die Gaseintrittsöffnungen 212 der inneren Schutzhülse 21 sind im Beispiel kreisrund und haben einen Durchmesser von 0,5mm. Der Strömungsquerschnitt des Gaseintritts der inneren Schutzhülse 21 beträgt also 6mm². Der Strömungsquerschnitt des Gasaustritts der inneren Schutzhülse 21 beträgt im Beispiel 14mm². Der Strömungsquerschnitt des Gaseintritts der äußeren Schutzhülse 22 beträgt im Beispiel 10mm². Die Länge des Sensorelements 14 beträgt ca. 55mm, die Längserstreckung des Schutzrohrs 20 beträgt ca. 28mm. Der Gaseintritt der inneren Schutzhülse 21 bildet somit den kleinsten Strömungsquerschnitt bei der Durchströmung des Schutzrohrs 20, woraus die eingangs erläuterten positiven Wirkungen resultieren.

In einer Variante kann der Durchmesser der Gaseintrittsöffnungen 212 der inneren Schutzhülse 21 auf 0,4mm oder sogar auf 0,3mm verringert werden. In Alternativen hierzu können auch lediglich acht insbesondere kreisrunde Gaseintrittsöffnungen 212 der inneren Schutzhülse 21 vorgesehen sein, deren Durchmesser 1mm oder 0,8mm oder 0,6mm betragen und die in einer Reihe gleichmäßig längs des Umfangs des inneren Schutzrohrs 21 angeordnet sind.

Eine Aufsicht auf das Sensorelement 14 in der Perspektive von unten nach oben in der Figur 2 ist wie in Figur 1b gezeigt. Das Sensorelement 14 ist planar ausgebildet und auf der Oberfläche des Sensorelements 14 ist in einem abgasseitigen Endbereich 141 eine Interdigitalelektroden-Struktur 142 angeordnet, die den sensitiven Bereich des Sensorelements 14 bildet. In einer Alternative kann auch ein zylindrisch ausgebildetes Sensorelement 14 verwendet werden.

Der Abgassensor 1 kann so in der Wandung 51 einer Abgasleitung 50 einer Brennkraftmaschine montiert werden, dass in einem Querschnitt der Abgasleitung 50 gesehen der Gaseintritt der äußeren Schutzhülse 22 in einem Randbereich 52 der Abgasleitung angeordnet ist, während der Gasaustritt der inneren Schutzhülse 21 in einem mittigen Bereich 53 der Abgasleitung angeordnet ist, siehe Figur 2. Abgas durchströmt die Abgasleitung 50 im Wesentlichen senkrecht zur Längsachse LA des Abgassensors 1, parallel zur Zeichenebene der Figur 2, in Richtung des Doppelpfeils 100. Da die Strömungsgeschwindigkeit in der Abgasleitung 50 in dem mittigen Bereich 53 der Abgasleitung höher ist als in dem Randbereich 52 der Abgasleitung, ist der statische Druck an der Gasaustrittsöffnung 213 der inneren Schutzhülse 21 geringer als an den Gaseintrittsöffnungen 222 der äußeren Schutzhülse 22. Infolgedessen strömt Abgas durch die Gaseintrittsöffnungen 222 der äußeren Schutzhülse 22 in den ringförmigen Raum 30, von dort durch die Gaseintrittsöffnungen 212 des inneren Schutzhülse 21 in das Innere der inneren Schutzhülse 21, wo es mit dem sensitiven Bereich des Sensorelements 14 wechselwirkt. Nachfolgend gelangt das Abgas durch die Gasaustrittsöffnung 213 der inneren Schutzhülse 21. Diese Durchströmung ist in der Figur 2 durch die Pfeil-Linie 101 kenntlich gemacht.

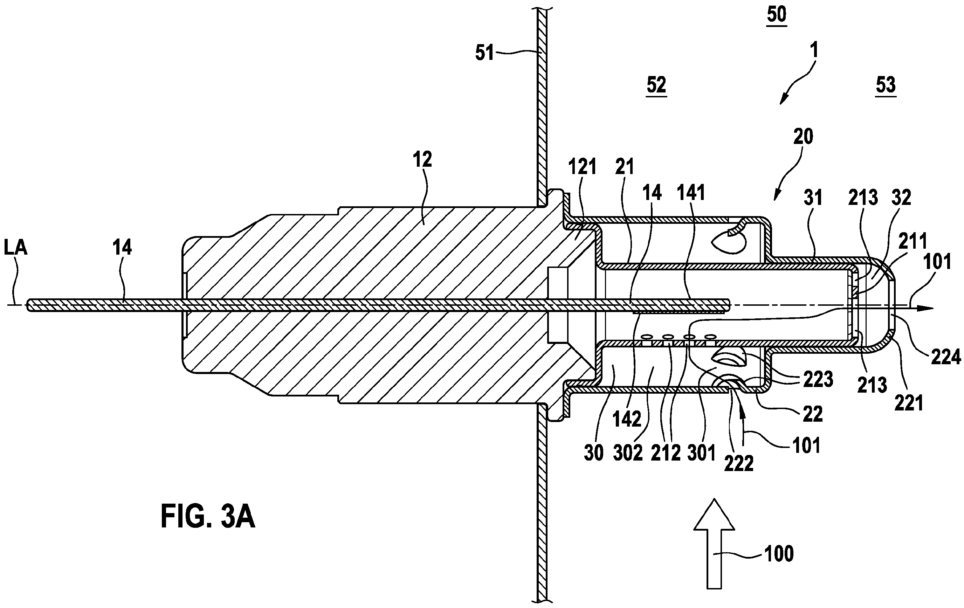

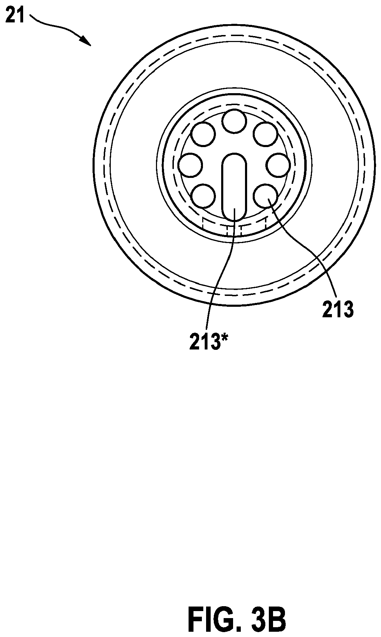

Die Figur 3 zeigt einen Querschnitt entlang der Längsachse LA des Abgassensors 1 gemäß einem dritten Ausführbeispiel. Der Abgassensor 1 weist ein hülsenförmiges Sensorgehäuse 12 auf, in dessen Durchgangsbohrung ein keramisches Sensorelement 14 fixiert ist. Das keramische Sensorelement 14 ragt sowohl auf der dem Abgas zugewandten Seite des Sensorgehäuses 12 (in Figur 3 rechts) als auch auf der dem Abgas abgewandten Seite des Sensorgehäuses 12 (in Figur 3 links) über das Sensorgehäuse 12 hinaus.

An einem in Abgasrichtung weisenden umlaufenden Kragen 121 des Sensorgehäuses 12 ist ein hülsenförmiges, metallisches Schutzrohr 20 angeschweißt. Das Schutzrohr 20 besteht aus einer inneren Schutzhülse 21 und einer äußeren Schutzhülse 22. Die innere Schutzhülse 21 umgibt einen abgasseitigen Endbereich 141 des Sensorelements 14 mit radialem und axialem Abstand.

Die äußere Schutzhülse 22 umgibt die innere Schutzhülse 21 derart, dass es auf axialer Höhe des Kragens 121 an dem inneren Schutzrohr 21 anliegt und zusammen mit diesem an dem Kragen 121 mittels einer umlaufenden Schweißnaht angeschweißt ist, dass ferner abgasseitig des Kragens 121 zwischen äußerer Schutzhülse 22 und innerer Schutzhülse 21 ein ringförmiger Raum 30 ausgebildet ist, dass ferner abgasseitig des ringförmigen Raums 30 ein Anlagebereich 31 ausgebildet ist, in dem die innere Schutzhülse 21 mit ihrer Außenfläche an der Innenfläche der äußeren Schutzhülse 22 vollumfänglich anliegt und dass ferner abgasseitig des Anlagebereichs 31 ein Stirnraum 32 ausgebildet ist, der radial von der äußeren Schutzhülse 22 begrenzt wird, auf der dem Abgas abgewandten Seite von einem als Prallplatte ausgebildeten Boden 211 der inneren Schutzhülse 21 begrenzt wird und auf der dem Abgas zugewandten Seite von einem Boden 221 der äußeren Schutzhülse 22 begrenzt wird.

Die äußere Schutzhülse 22 weist beispielsweise acht Gaseintrittsöffnungen 222 auf, die mit gleichen Abständen entlang des Umfangs der äußeren Schutzhülse 22 auf axialer Höhe eines dem Abgas zugewandten Endbereichs 301 des ringförmigen Raums 30 angeordnet sind. Im Beispiel weisen die Gaseintrittsöffnungen 222 jeweils ein Drallelement 223 auf, das als Drallklappe ausgebildet ist und dem in den ringförmigen Raum 30 einströmenden Gas ein zum Sensorgehäuse 12 gerichteten Impuls und einen in Richtung der Längsachse LA des Sensors gerichteten Drehimpuls verleiht, sodass das Abgas innerhalb des ringförmigen Raums 30 um die innere Schutzhülse 21 rotiert. In einer Variante dieser Ausführungsform kann auf Drallelemente 223 verzichtet werden.

Die äußere Schutzhülse 22 weist ferner an dem Boden 221 eine relativ große Gasaustrittsöffnung 224 auf. In einer Variante kann die Gasaustrittsöffnung 224 sogar derart vergrößert sein, dass der Boden 221 ganz oder weitgehend entfällt.

Die innere Schutzhülse 21 weist in dem in Figur 3 unteren Bereich acht Gaseintrittsöffnungen 212 auf, die in zwei in axialer Richtung nebeneinander verlaufenden Reihen zu je vier Gaseintrittsöffnungen 212 verlaufen. Die Gaseintrittsöffnungen 212 sind auf axialer Höhe eines in axialer Richtung etwa mittigen Bereichs 302 des ringförmigen Raums 30 angeordnet. Die Gaseintrittsöffnungen 212 sind ferner auf axialer Höhe des Sensorelements 14 angeordnet. In einer Variante sind lediglich vier Gaseintrittsöffnungen 212 vorgesehen, die in zwei in axialer Richtung nebeneinander verlaufenden Reihen zu je zwei Gaseintrittsöffnungen 212 verlaufen.

Genauer sind die Gaseintrittsöffnungen 212 auf axialer Höhe eines sensitiven Bereichs des Sensorelements 14 angeordnet. Der sensitive Bereich des Sensorelements 14 ist beispielsweise eine Interdigitalelektroden-Struktur 142 (siehe auch Fig. 1b), insofern handelt es sich bei dem Abgassensor um einen Partikelsensor zum Nachweis von Ruß im Abgas einer Brennkraftmaschine. Alternativ könnte der sensitive Bereich auch eine Elektrode einer elektrochemischen Zelle und/oder eine in das Innere des Sensorelements führende Öffnung beispielsweise einer Breitband-Lambdasonde oder eines NOx-Sensors sein.

Eine Besonderheit des Ausführbeispiels besteht darin, dass sämtliche Gaseintrittsöffnungen 212 der inneren Schutzhülse 21 lediglich auf einem radialen Teilbereich und lediglich auf einem axialen Teilbereich der inneren Schutzhülse 21 angeordnet sind und der sensitive Bereich und sämtliche Gaseintrittsöffnungen 212 der inneren Schutzhülse 21 einander gegenüberliegend sind, sodass in das Innere der inneren Schutzhülse 21 eintretendes Abgas den sensitiven Bereich stets unmittelbar anströmt.

Die innere Schutzhülse 21 weist auf ihrem Boden 211 einen Kranz von acht außermittig angeordneten Gasaustrittsöffnungen 213 auf. Zusätzlich ist eine weitere mittige Gasaustrittsöffnung 213 auf dem Boden 211 der inneren Schutzhülse 21 vorgesehen. In einer Variante kann diese mittige Gasaustrittsöffnung 213 auch entfallen.

Die Gasaustrittsöffnungen 213 der inneren Schutzhülse 21 sind kreisrund, insbesondere mit Ausnahme derjenigen Gasaustrittsöffnung 213*, die in der Figur 3a nach unten weist. Letztere ist als ovales Loch oder Langloch ausgeführt und zeigt so die Position der Gaseintrittsöffnungen 212 der inneren Schutzhülse 21 nach außen derart an, dass es mit Blickrichtung entlang der Längsachse LA des Sensors optisch erkennbar ist, siehe Figur 3b.

Die Gaseintrittsöffnungen 212 der inneren Schutzhülse 21 sind im Beispiel kreisrund und haben einen Durchmesser von 1mm. Der Strömungsquerschnitt des Gaseintritts der inneren Schutzhülse 21 beträgt also 6mm². Der Strömungsquerschnitt des Gasaustritts der inneren Schutzhülse 21 beträgt im Beispiel 10mm². Der Strömungsquerschnitt des Gasaustritts der äußeren Schutzhülse 22 beträgt im Beispiel 14mm². Der Strömungsquerschnitt des Gaseintritts der äußeren Schutzhülse 22 beträgt im Beispiel 10mm². Die Länge des Sensorelements 14 beträgt ca. 55mm, die Längserstreckung des Schutzrohrs 20 beträgt ca. 28mm. Der Gaseintritt der inneren Schutzhülse 21 bildet somit den kleinsten Strömungsquerschnitt bei der Durchströmung des Schutzrohrs 20, woraus die eingangs erläuterten positiven Wirkungen resultieren.

In einer Variante kann der Durchmesser der Gaseintrittsöffnungen 212 der inneren Schutzhülse 21 auf 0,8mm oder sogar auf 0,6mm oder noch weiterverringert werden.

Eine Aufsicht auf das Sensorelement 14 in der Perspektive von unten nach oben in der Figur 3 ist wie in der Figur 1b gezeigt. Das Sensorelement 14 ist planar ausgebildet und auf der Oberfläche des Sensorelements 14 ist in einem abgasseitigen Endbereich 141 eine Interdigitalelektroden-Struktur 142 angeordnet, die den sensitiven Bereich des Sensorelements 14 bildet.

Der Abgassensor 1 kann so in der Wandung 51 einer Abgasleitung 50 einer Brennkraftmaschine montiert werden, dass in einem Querschnitt der Abgasleitung 50 gesehen der Gaseintritt der äußeren Schutzhülse 22 in einem Randbereich 52 der Abgasleitung angeordnet ist, während der Gasaustritt der äußeren Schutzhülse 22 in einem mittigen Bereich 53 der Abgasleitung angeordnet ist, siehe Figur 3. Abgas durchströmt die Abgasleitung 50 im Wesentlichen senkrecht zur Längsachse LA des Abgassensors 1, parallel zur Zeichenebene der Figur 3, in Richtung des Doppelpfeils 100. Da die Strömungsgeschwindigkeit in der Abgasleitung 50 in dem mittigen Bereich 53 der Abgasleitung höher ist als in dem Randbereich 52 der Abgasleitung, ist der statische Druck an der Gasaustrittsöffnung 224 der äußeren Schutzhülse 22 geringer als an den Gaseintrittsöffnungen 222 der äußeren Schutzhülse 22. Infolgedessen strömt Abgas durch die Gaseintrittsöffnungen 222 der äußeren Schutzhülse 22 in den ringförmigen Raum 30, von dort durch die Gaseintrittsöffnungen 212 des inneren Schutzhülse 21 in das Innere der inneren Schutzhülse 21, wo es mit dem sensitiven Bereich des Sensorelements 14 wechselwirkt. Nachfolgend gelangt das Abgas durch die Gasaustrittsöffnungen 213 der inneren Schutzhülse 21 in den Stirnraum 32 und von dort durch die Gasaustrittsöffnung 224 der äußeren Schutzhülse 22. Diese Durchströmung ist in der Figur 3 durch die Pfeil-Linie 101 kenntlich gemacht.

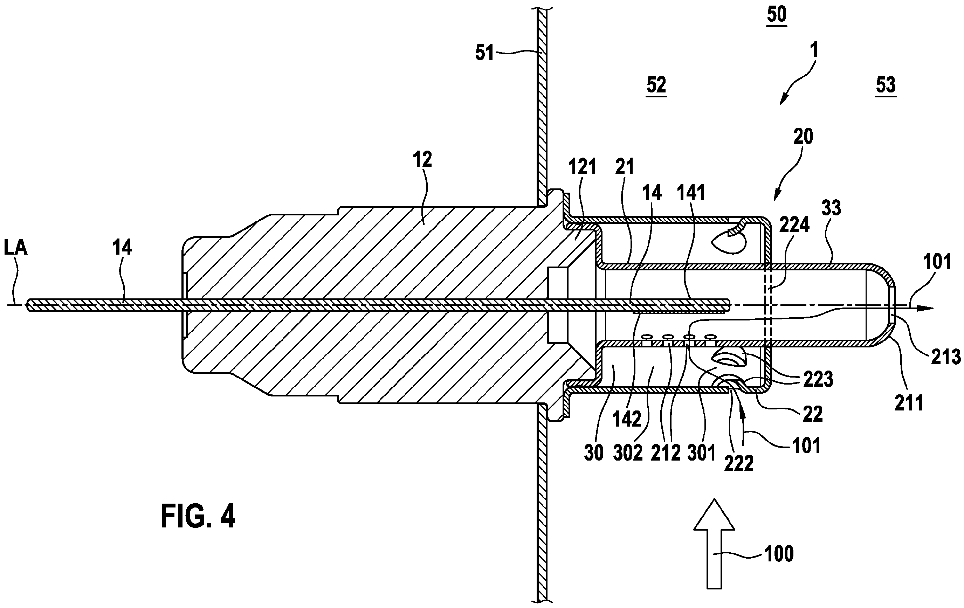

Die Figur 4 zeigt einen Querschnitt entlang der Längsachse LA des Abgassensors 1 gemäß einem vierten Ausführbeispiel. Der Abgassensor 1 weist ein hülsenförmiges Sensorgehäuse 12 auf, in dessen Durchgangsbohrung ein keramisches Sensorelement 14 fixiert ist. Das keramische Sensorelement 14 ragt sowohl auf der dem Abgas zugewandten Seite des Sensorgehäuses 12 (in Figur 4 rechts) als auch auf der dem Abgas abgewandten Seite des Sensorgehäuses 12 (in Figur 4 links) über das Sensorgehäuse 12 hinaus.

An einem in Abgasrichtung weisenden umlaufenden Kragen 121 des Sensorgehäuses 12 ist ein hülsenförmiges, metallisches Schutzrohr 20 angeschweißt. Das Schutzrohr 20 besteht aus einer inneren Schutzhülse 21 und einer äußeren Schutzhülse 22. Die innere Schutzhülse 21 umgibt einen abgasseitigen Endbereich 141 des Sensorelements 14 mit radialem und axialem Abstand.

Die äußere Schutzhülse 22 umgibt die innere Schutzhülse 21 derart, dass es auf axialer Höhe des Kragens 121 an dem inneren Schutzrohr 21 anliegt und zusammen mit diesem an dem Kragen 121 mittels einer umlaufenden Schweißnaht angeschweißt ist und dass ferner abgasseitig des Kragens 121 zwischen äußerer Schutzhülse 22 und innerer Schutzhülse 21 ein ringförmiger Raum 30 ausgebildet ist. Abgasseitig des ringförmigen Raums 30 weist die äußere Schutzhülse 22 eine relativ große zentrale Gasaustrittsöffnung 224 auf, in der die innere Schutzhülse 21 fixiert ist und durch die hindurch die innere Schutzhülse 21 abgasseitig über die äußere Schutzhülse 22 in einem Überstehbereich 33 übersteht. Die innere Schutzhülse 21 ist spaltfrei, also dicht, in der Gasaustrittsöffnung 224 der äußeren Schutzhülse 22 fixiert, insbesondere eingepresst. Der Überstehbereich 33 endet abgasseitig mit einem Boden 211 der inneren Schutzhülse 21.

Die äußere Schutzhülse 22 weist beispielsweise acht Gaseintrittsöffnungen 222 auf, die mit gleichen Abständen entlang des Umfangs der äußeren Schutzhülse 22 auf axialer Höhe eines dem Abgas zugewandten Endbereichs 301 des ringförmigen Raums 30 angeordnet sind. Im Beispiel weisen die Gaseintrittsöffnungen 222 jeweils ein Drallelement 223 auf, das als Drallklappe ausgebildet ist und dem in den ringförmigen Raum 30 einströmenden Gas ein zum Sensorgehäuse 12 gerichteten Impuls und einen in Richtung der Längsachse LA des Sensors gerichteten Drehimpuls verleiht, sodass das Abgas innerhalb des ringförmigen Raums 30 um die innere Schutzhülse 21 rotiert. In einer Variante dieser Ausführungsform kann auf Drallelemente 223 verzichtet werden.

Die innere Schutzhülse 21 weist in dem in Figur 4 unteren Bereich acht Gaseintrittsöffnungen 212 auf, die in zwei in axialer Richtung nebeneinander verlaufenden Reihen zu je vier Gaseintrittsöffnungen 212 verlaufen. Die Gaseintrittsöffnungen 212 sind auf axialer Höhe eines in axialer Richtung etwa mittigen Bereichs 302 des ringförmigen Raums 30 angeordnet. Die Gaseintrittsöffnungen 212 sind ferner auf axialer Höhe des Sensorelements 14 angeordnet. In einer Variante sind lediglich vier Gaseintrittsöffnungen 212 vorgesehen, die in zwei in axialer Richtung nebeneinander verlaufenden Reihen zu je zwei Gaseintrittsöffnungen 212 verlaufen.

Genauer sind die Gaseintrittsöffnungen 212 auf axialer Höhe eines sensitiven Bereichs des Sensorelements 14 angeordnet. Der sensitive Bereich des Sensorelements 14 ist beispielsweise eine Interdigitalelektroden-Struktur 142 (siehe auch Fig. 1b), insofern handelt es sich bei dem Abgassensor um einen Partikelsensor zum Nachweis von Ruß im Abgas einer Brennkraftmaschine. Alternativ könnte der sensitive Bereich auch eine Elektrode einer elektrochemischen Zelle und/oder eine in das Innere des Sensorelements führende Öffnung beispielsweise einer Breitband-Lambdasonde oder eines NOx-Sensors sein.

Eine Besonderheit des Ausführbeispiels besteht darin, dass sämtliche Gaseintrittsöffnungen 212 der inneren Schutzhülse 21 lediglich auf einem radialen Teilbereich und lediglich auf einem axialen Teilbereich der inneren Schutzhülse 21 angeordnet sind und der sensitive Bereich und sämtliche Gaseintrittsöffnungen 212 der inneren Schutzhülse 21 einander gegenüberliegend sind, sodass in das Innere der inneren Schutzhülse 21 eintretendes Abgas den sensitiven Bereich stets unmittelbar anströmt.

Die innere Schutzhülse 21 weist auf ihrem Boden 211 eine zentrale relativ große Gasaustrittsöffnung 213 auf.

Die Gaseintrittsöffnungen 212 der inneren Schutzhülse 21 sind im Beispiel kreisrund und haben einen Durchmesser von 1mm. Der Strömungsquerschnitt des Gaseintritts der inneren Schutzhülse 21 beträgt also 6mm². Der Strömungsquerschnitt des Gasaustritts der inneren Schutzhülse 21 beträgt im Beispiel 14mm². Der Strömungsquerschnitt des Gaseintritts der äußeren Schutzhülse 22 beträgt im Beispiel 10mm². Die Länge des Sensorelements 14 beträgt ca. 55mm, die Längserstreckung des Schutzrohrs 20 beträgt ca. 28mm. Der Gaseintritt der inneren Schutzhülse 21 bildet somit den kleinsten Strömungsquerschnitt bei der Durchströmung des Schutzrohrs 20, woraus die eingangs erläuterten positiven Wirkungen resultieren.

In einer Variante kann der Durchmesser der Gaseintrittsöffnungen 212 der inneren Schutzhülse 21 auf 0,8mm oder sogar auf 0,6mm oder noch weiterverringert werden.

Eine Aufsicht auf das Sensorelement 14 in der Perspektive von unten nach oben in der Figur 4 ist wie in Figur 1b gezeigt. Das Sensorelement 14 ist planar ausgebildet und auf der Oberfläche des Sensorelements 14 ist in einem abgasseitigen Endbereich 141 eine Interdigitalelektroden-Struktur 142 angeordnet, die den sensitiven Bereich des Sensorelements 14 bildet.

Der Abgassensor 1 kann so in der Wandung 51 einer Abgasleitung 50 einer Brennkraftmaschine montiert werden, dass in einem Querschnitt der Abgasleitung 50 gesehen der Gaseintritt der äußeren Schutzhülse 22 in einem Randbereich 52 der Abgasleitung angeordnet ist, während der Gasaustritt der inneren Schutzhülse 21 in einem mittigen Bereich 53 der Abgasleitung angeordnet ist, siehe Figur 4. Abgas durchströmt die Abgasleitung 50 im Wesentlichen senkrecht zur Längsachse LA des Abgassensors 1, parallel zur Zeichenebene der Figur 4, in Richtung des Doppelpfeils 100. Da die Strömungsgeschwindigkeit in der Abgasleitung 50 in dem mittigen Bereich 53 der Abgasleitung höher ist als in dem Randbereich 52 der Abgasleitung, ist der statische Druck an der Gasaustrittsöffnung 213 der inneren Schutzhülse 21 geringer als an den Gaseintrittsöffnungen 222 der äußeren Schutzhülse 22. Infolgedessen strömt Abgas durch die Gaseintrittsöffnungen 222 der äußeren Schutzhülse 22 in den ringförmigen Raum 30, von dort durch die Gaseintrittsöffnungen 212 des inneren Schutzhülse 21 in das Innere der inneren Schutzhülse 21, wo es mit dem sensitiven Bereich des Sensorelements 14 wechselwirkt. Nachfolgend gelangt das Abgas durch die Gasaustrittsöffnung 213 der inneren Schutzhülse 21. Diese Durchströmung ist in der Figur 4 durch die Pfeil-Linie 101 kenntlich gemacht.

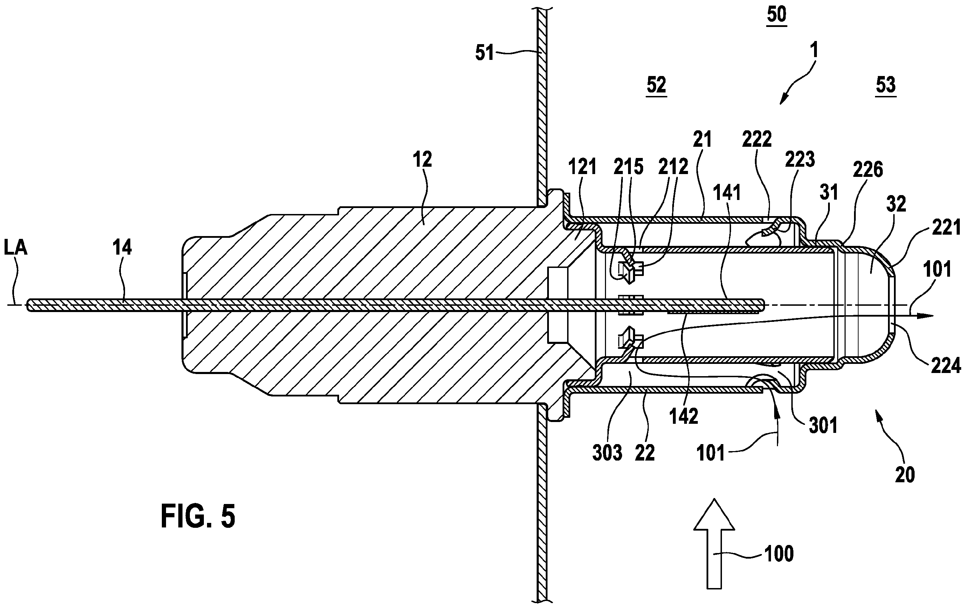

Die Figur 5 zeigt einen Querschnitt entlang der Längsachse LA des Abgassensors 1 gemäß einem fünften Ausführbeispiel. Der Abgassensor 1 weist ein hülsenförmiges Sensorgehäuse 12 auf, in dessen Durchgangsbohrung ein keramisches Sensorelement 14 fixiert ist. Das keramische Sensorelement 14 ragt sowohl auf der dem Abgas zugewandten Seite des Sensorgehäuses 12 (in Figur 5 rechts) als auch auf der dem Abgas abgewandten Seite des Sensorgehäuses 12 (in Figur 5 links) über das Sensorgehäuse 12 hinaus.

An einem in Abgasrichtung weisenden umlaufenden Kragen 121 des Sensorgehäuses 12 ist ein hülsenförmiges, metallisches Schutzrohr 20 angeschweißt. Das Schutzrohr 20 besteht aus einer inneren Schutzhülse 21 und einer äußeren Schutzhülse 22. Die innere Schutzhülse 21 umgibt einen abgasseitigen Endbereich 141 des Sensorelements 14 mit radialem und axialem Abstand.

Die äußere Schutzhülse 22 umgibt die innere Schutzhülse 21 derart, dass es auf axialer Höhe des Kragens 121 an dem inneren Schutzrohr 21 anliegt und zusammen mit diesem an dem Kragen 121 mittels einer umlaufenden Schweißnaht angeschweißt ist, dass ferner abgasseitig des Kragens 121 zwischen äußerer Schutzhülse 22 und innerer Schutzhülse 21 ein ringförmiger Raum 30 ausgebildet ist, dass ferner abgasseitig des ringförmigen Raums 30 ein Anlagebereich 31 ausgebildet ist, in dem die innere Schutzhülse 21 mit ihrer Außenfläche an der Innenfläche der äußeren Schutzhülse 22 vollumfänglich anliegt und dass ferner abgasseitig des Anlagebereichs 31 ein Stirnraum 32 ausgebildet ist, der radial von einem mittels einer Ringschulter 226 leicht radial verjüngten Bereich der äußeren Schutzhülse 22 begrenzt wird, auf der dem Abgas abgewandten Seite zum Inneren der inneren Schutzhülse 21 hin offen ist und auf der dem Abgas zugewandten Seite von einem Boden 221 der äußeren Schutzhülse 22 begrenzt wird.

Die äußere Schutzhülse 22 weist beispielsweise acht Gaseintrittsöffnungen 222 auf, die mit gleichen Abständen entlang des Umfangs der äußeren Schutzhülse 22 auf axialer Höhe eines dem Abgas zugewandten Endbereichs 301 des ringförmigen Raums 30 angeordnet sind. Im Beispiel weisen die Gaseintrittsöffnungen 222 jeweils ein Drallelement 223 auf, das als Drallklappe ausgebildet ist und dem in den ringförmigen Raum 30 einströmenden Gas ein zum Sensorgehäuse 12 gerichteten Impuls und einen in Richtung der Längsachse LA des Sensors gerichteten Drehimpuls verleiht, sodass das Abgas innerhalb des ringförmigen Raums 30 um die innere Schutzhülse 21 rotiert. In einer Variante dieser Ausführungsform kann auf Drallelemente 223 verzichtet werden.

Die äußere Schutzhülse 22 weist ferner an dem Boden 221 eine relativ große Gasaustrittsöffnung 224 auf. In einer Variante kann die Gasaustrittsöffnung 224 sogar derart vergrößert sein, dass der Boden 221 ganz oder weitgehend entfällt.

Die innere Schutzhülse 21 weist beispielsweise acht Gaseintrittsöffnungen 212 auf, die mit gleichen Abständen entlang des Umfangs der inneren Schutzhülse 21 gehäuseseitig auf axialer Höhe eines in axialer Richtung gehäuseseitigen Bereichs 303 des ringförmigen Raums 30 angeordnet sind. Die Gaseintrittsöffnungen 212 sind ferner auf axialer Höhe des Sensorelements 14 angeordnet.

Genauer sind die Gaseintrittsöffnungen 212 gehäuseseitig eines sensitiven Bereichs des Sensorelements 14 angeordnet. Der sensitive Bereich des Sensorelements 14 ist eine Interdigitalelektroden-Struktur 142 (siehe auch Fig. 1b), insofern handelt es sich bei dem Abgassensor um einen Partikelsensor zum Nachweis von Ruß im Abgas einer Brennkraftmaschine.

Bei diesem Ausführbeispiel besteht ferner die Besonderheit, dass die Gaseintrittsöffnungen 212 insbesondere rechteckig ausgebildet sind und insbesondere jeweils ein insbesondere rechteckig ausgebildetes Umlenkelement 215 aufweisen, das insbesondere in Form eines in das Sensorgehäuse 12 eingedrückten Streifens ausgebildetes ist und das ein in den ringförmigen Raum 30 eintretendes Abgas in Richtung des Gasaustritts der inneren Schutzhülse 21 hin ablenkt. Alternativ kann der Gaseintrittsöffnung 212 auch ein Umlenkelement 215 zugeordnet sein, das eine andere Form, insbesondere die Form der Drallklappe, aufweist, und das ein in den ringförmigen Raum 30 eintretendes Abgas in Richtung des Gasaustritts der inneren Schutzhülse 21 hin ablenkt.

Die Gaseintrittsöffnungen 212 der inneren Schutzhülse 21 sind in diesem Beispiel auf der abgasabgewandten axialen Seite des sensitiven Bereichs des Sensorelements 14 angeordnet. Somit wird das in das Innere der inneren Schutzhülse 21 einströmende Abgas durch die Umlenkelemente 215 auf den sensitiven Bereich des Sensorelements 14 gerichtet.

Die innere Schutzhülse 21 kann auf ihrem Boden 211 einen Kranz von acht außermittig angeordneten Gasaustrittsöffnungen 213 aufweisen. Zusätzlich kann eine weitere mittige Gasaustrittsöffnung 213 auf dem Boden 211 der inneren Schutzhülse vorgesehen sein. In der in Figur 5 gezeigten Variante entfällt allerdings ein Boden der inneren Schutzhülse 21. Letztere steht somit abgasseitig vollständig offen.

Die Gaseintrittsöffnungen 212 der inneren Schutzhülse 21 sind im Beispiel rechteckig und haben einen Strömungsquerschnitt von insgesamt 8mm². Der Strömungsquerschnitt des Gasaustritts der inneren Schutzhülse 21 beträgt im Beispiel über 50mm². Der Strömungsquerschnitt des Gasaustritts der äußeren Schutzhülse 22 beträgt im Beispiel 14mm². Der Strömungsquerschnitt des Gaseintritts der äußeren Schutzhülse 22 beträgt im Beispiel 10mm². Die Länge des Sensorelements 14 beträgt ca. 55mm, die Längserstreckung des Schutzrohrs 20 beträgt ca. 28mm. Der Gaseintritt der inneren Schutzhülse 21 bildet somit den kleinsten Strömungsquerschnitt bei der Durchströmung des Schutzrohrs 20, woraus die eingangs erläuterten positiven Wirkungen resultieren. In einer Variante kann der Querschnitt der Gaseintrittsöffnungen 212 der inneren Schutzhülse 21 auf jeweils 0,8 oder sogar auf 0,6mm² verringert werden.

Eine Aufsicht auf das Sensorelement 14 in der Perspektive von unten nach oben in der Figur 5 ist wie in Figur 1b gezeigt. Das Sensorelement 14 ist planar ausgebildet und auf der Oberfläche des Sensorelements 14 ist in einem abgasseitigen Endbereich 141 eine Interdigitalelektroden-Struktur 142 angeordnet, die den sensitiven Bereich des Sensorelements 14 bildet. In einer Alternative kann auch ein zylindrisch ausgebildetes Sensorelement 14 verwendet werden.

Der Abgassensor 1 kann so in der Wandung 51 einer Abgasleitung 50 einer Brennkraftmaschine montiert werden, dass in einem Querschnitt der Abgasleitung 50 gesehen der Gaseintritt der äußeren Schutzhülse 22 in einem Randbereich 52 der Abgasleitung angeordnet ist, während der Gasaustritt der äußeren Schutzhülse 22 in einem mittigen Bereich 53 der Abgasleitung angeordnet ist, siehe Figur 5. Abgas durchströmt die Abgasleitung 50 im Wesentlichen senkrecht zur Längsachse LA des Abgassensors 1, parallel zur Zeichenebene der Figur 5, in Richtung des Doppelpfeils 100. Da die Strömungsgeschwindigkeit in der Abgasleitung 50 in dem mittigen Bereich 53 der Abgasleitung höher ist als in dem Randbereich 52 der Abgasleitung, ist der statische Druck an der Gasaustrittsöffnung 224 der äußeren Schutzhülse 22 geringer als an den Gaseintrittsöffnungen 222 der äußeren Schutzhülse 22. Infolgedessen strömt Abgas durch die Gaseintrittsöffnungen 222 der äußeren Schutzhülse 22 in den ringförmigen Raum 30, von dort durch die Gaseintrittsöffnungen 212 des inneren Schutzhülse 21 in das Innere der inneren Schutzhülse 21, wo es mit dem sensitiven Bereich des Sensorelements 14 wechselwirkt. Nachfolgend gelangt das Abgas durch die Gasaustrittsöffnungen 213 der inneren Schutzhülse 21 in den Stirnraum 32 und von dort durch die Gasaustrittsöffnung 224 der äußeren Schutzhülse 22. Diese Durchströmung ist in der Figur 5 durch die Pfeil-Linie 101 kenntlich gemacht.

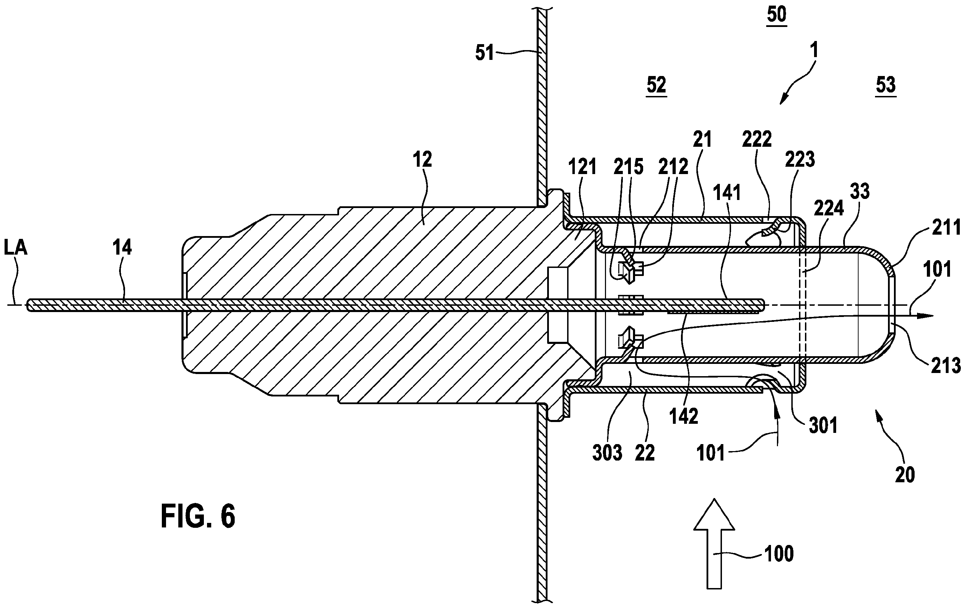

Die Figur 6 zeigt einen Querschnitt entlang der Längsachse LA des Abgassensors 1 gemäß einem sechsten Ausführbeispiel. Der Abgassensor 1 weist ein hülsenförmiges Sensorgehäuse 12 auf, in dessen Durchgangsbohrung ein keramisches Sensorelement 14 fixiert ist. Das keramische Sensorelement 14 ragt sowohl auf der dem Abgas zugewandten Seite des Sensorgehäuses 12 (in Figur 6 rechts) als auch auf der dem Abgas abgewandten Seite des Sensorgehäuses 12 (in Figur 6 links) über das Sensorgehäuse 12 hinaus.

An einem in Abgasrichtung weisenden umlaufenden Kragen 121 des Sensorgehäuses 12 ist ein hülsenförmiges, metallisches Schutzrohr 20 angeschweißt. Das Schutzrohr 20 besteht aus einer inneren Schutzhülse 21 und einer äußeren Schutzhülse 22. Die innere Schutzhülse 21 umgibt einen abgasseitigen Endbereich 141 des Sensorelements 14 mit radialem und axialem Abstand.

Die äußere Schutzhülse 22 umgibt die innere Schutzhülse 21 derart, dass es auf axialer Höhe des Kragens 121 an dem inneren Schutzrohr 21 anliegt und zusammen mit diesem an dem Kragen 121 mittels einer umlaufenden Schweißnaht angeschweißt ist und dass ferner abgasseitig des Kragens 121 zwischen äußerer Schutzhülse 22 und innerer Schutzhülse 21 ein ringförmiger Raum 30 ausgebildet ist. Abgasseitig des ringförmigen Raums 30 weist die äußere Schutzhülse 22 eine relativ große zentrale Gasaustrittsöffnung 224 auf, in der die innere Schutzhülse 21 fixiert ist und durch die hindurch die innere Schutzhülse 21 abgasseitig über die äußere Schutzhülse 22 in einem Überstehbereich 33 übersteht. Die innere Schutzhülse 21 ist spaltfrei, also dicht, in der Gasaustrittsöffnung 224 der äußeren Schutzhülse 22 fixiert, insbesondere eingepresst. Der Überstehbereich 33 endet abgasseitig mit einem Boden 211 der inneren Schutzhülse 21.

Die äußere Schutzhülse 22 weist beispielsweise acht Gaseintrittsöffnungen 222 auf, die mit gleichen Abständen entlang des Umfangs der äußeren Schutzhülse 22 auf axialer Höhe eines dem Abgas zugewandten Endbereichs 301 des ringförmigen Raums 30 angeordnet sind. Im Beispiel weisen die Gaseintrittsöffnungen 222 jeweils ein Drallelement 223 auf, das als Drallklappe ausgebildet ist und dem in den ringförmigen Raum 30 einströmenden Gas ein zum Sensorgehäuse 12 gerichteten Impuls und einen in Richtung der Längsachse LA des Sensors gerichteten Drehimpuls verleiht, sodass das Abgas innerhalb des ringförmigen Raums 30 um die innere Schutzhülse 21 rotiert. In einer Variante dieser Ausführungsform kann auf Drallelemente 223 verzichtet werden.

Die innere Schutzhülse 21 weist beispielsweise acht Gaseintrittsöffnungen 212 auf, die mit gleichen Abständen entlang des Umfangs der inneren Schutzhülse 21 in einem in axialer Richtung gehäuseseitigen Bereich 303 des ringförmigen Raums 30 angeordnet sind. Die Gaseintrittsöffnungen 212 sind ferner auf axialer Höhe des Sensorelements 14 angeordnet.

Genauer sind die Gaseintrittsöffnungen 212 gehäuseseitig eines sensitiven Bereichs des Sensorelements 14 angeordnet. Der sensitive Bereich des Sensorelements 14 ist eine Interdigitalelektroden-Struktur 142 (siehe auch Fig. 1b), insofern handelt es sich bei dem Abgassensor um einen Partikelsensor zum Nachweis von Ruß im Abgas einer Brennkraftmaschine.

Bei diesem Ausführbeispiel besteht ferner die Besonderheit, dass die Gaseintrittsöffnungen 212 insbesondere rechteckig ausgebildet sind und insbesondere jeweils ein insbesondere rechteckig ausgebildetes Umlenkelement 215 aufweisen, das insbesondere in Form eines in das Sensorgehäuse 12 eingedrückten Streifens ausgebildetes ist und das ein in den ringförmigen Raum 30 eintretendes Abgas in Richtung des Gasaustritts der inneren Schutzhülse 21 hin ablenkt. Alternativ kann der Gaseintrittsöffnung 212 auch ein Umlenkelement 215 zugeordnet sein, das eine andere Form, insbesondere die Form der Drallklappe, aufweist, und das ein in den ringförmigen Raum 30 eintretendes Abgas in Richtung des Gasaustritts der inneren Schutzhülse 21 hin ablenkt.

Die Gaseintrittsöffnungen 212 der inneren Schutzhülse 21 sind in diesem Beispiel auf der abgasabgewandten axialen Seite des sensitiven Bereichs des Sensorelements 14 angeordnet. Somit wird das in das Innere der inneren Schutzhülse 21 einströmende Abgas durch die Umlenkelemente 215 auf den sensitiven Bereich des Sensorelements 14 gerichtet.

Die innere Schutzhülse 21 weist auf ihrem Boden 211 eine zentrale relativ große Gasaustrittsöffnung 213 auf.

Die Gaseintrittsöffnungen 212 der inneren Schutzhülse 21 sind im Beispiel rechteckig und haben einen Strömungsquerschnitt von insgesamt 8mm². Der Strömungsquerschnitt des Gasaustritts der inneren Schutzhülse 21 beträgt im Beispiel über 14mm². Der Strömungsquerschnitt des Gaseintritts der äußeren Schutzhülse 22 beträgt im Beispiel 10mm². Die Länge des Sensorelements 14 beträgt ca. 55mm, die Längserstreckung des Schutzrohrs 20 beträgt ca. 28mm. Der Gaseintritt der inneren Schutzhülse 21 bildet somit den kleinsten Strömungsquerschnitt bei der Durchströmung des Schutzrohrs 20, woraus die eingangs erläuterten positiven Wirkungen resultieren.

In einer Variante kann der Querschnitt der Gaseintrittsöffnungen 212 der inneren Schutzhülse 21 auf jeweils 0,8 oder sogar auf 0,6mm² verringert werden.

Eine Aufsicht auf das Sensorelement 14 in der Perspektive von unten nach oben in der Figur 6 ist wie in Figur 1b gezeigt. Das Sensorelement 14 ist planar ausgebildet und auf der Oberfläche des Sensorelements 14 ist in einem abgasseitigen Endbereich 141 eine Interdigitalelektroden-Struktur 142 angeordnet, die den sensitiven Bereich des Sensorelements 14 bildet.

Der Abgassensor 1 kann so in der Wandung 51 einer Abgasleitung 50 einer Brennkraftmaschine montiert werden, dass in einem Querschnitt der Abgasleitung 50 gesehen der Gaseintritt der äußeren Schutzhülse 22 in einem Randbereich 52 der Abgasleitung angeordnet ist, während der Gasaustritt der inneren Schutzhülse 21 in einem mittigen Bereich 53 der Abgasleitung angeordnet ist, siehe Figur 6. Abgas durchströmt die Abgasleitung 50 im Wesentlichen senkrecht zur Längsachse LA des Abgassensors 1, parallel zur Zeichenebene der Figur 6, in Richtung des Doppelpfeils 100. Da die Strömungsgeschwindigkeit in der Abgasleitung 50 in dem mittigen Bereich 53 der Abgasleitung höher ist als in dem Randbereich 52 der Abgasleitung, ist der statische Druck an der Gasaustrittsöffnung 213 der inneren Schutzhülse 21 geringer als an den Gaseintrittsöffnungen 222 der äußeren Schutzhülse 22. Infolgedessen strömt Abgas durch die Gaseintrittsöffnungen 222 der äußeren Schutzhülse 22 in den ringförmigen Raum 30, von dort durch die Gaseintrittsöffnungen 212 des inneren Schutzhülse 21 in das Innere der inneren Schutzhülse 21, wo es mit dem sensitiven Bereich des Sensorelements 14 wechselwirkt. Nachfolgend gelangt das Abgas durch die Gasaustrittsöffnung 213 der inneren Schutzhülse 21. Diese Durchströmung ist in der Figur 6 durch die Pfeil-Linie 101 kenntlich gemacht.

## Patentansprüche

1. Abgassensor umfassend ein hülsenförmiges Sensorgehäuse (12), ein in dem Sensorgehäuse (12) fixiertes Sensorelement (14), das abgasseitig über das Sensorgehäuse (12) hinausragt, und ein hülsenförmiges Schutzrohr (20), das abgasseitig auf dem Sensorgehäuse (12) befestigt ist, wobei das Schutzrohr (20) aus einer inneren Schutzhülse (21) und einer äußeren Schutzhülse (22) besteht, wobei die innere Schutzhülse (21) einen abgasseitigen Endbereich (141) des Sensorelements (14) umgibt, wobei die äußere Schutzhülse (22) die innere Schutzhülse (21) zumindest bereichsweise umgibt, sodass zwischen äußerer Schutzhülse (22) und innerer Schutzhülse (21) ein ringförmiger Raum (30) ausgebildet ist, wobei die äußere Schutzhülse (22) und die innere Schutzhülse (21) jeweils einen Gasaustritt und einen Gaseintritt aufweisen und eine Durchströmung des Schutzrohrs (20) im Fall eines in axialer Richtung weisenden negativen Gradienten des statischen Drucks im Abgas, wenn also der statische Druck am abgasseitigen axialen Ende des Schutzrohrs (20) kleiner ist als an dem vom Abgas abgewandten axialen Ende des Schutzrohrs (20), das Schutzrohr (20) zwingend von dem Gaseintritt der äußeren Schutzhülse (22) in den ringförmigen Raum (30), von dort durch den Gaseintritt der inneren Schutzhülse (21) in das Innere der inneren Schutzhülse (21) und von dort durch die Gasaustritte der äußeren und der inneren Schutzhülse (21, 22) erfolgt, wobei der Gaseintritt der inneren Schutzhülse (21) den kleinsten Strömungsquerschnitt bei der Durchströmung des Schutzrohrs (20) bildet und wobei der Abgassensor ein Partikelsensor zur Bestimmung der Konzentration von Ruß im Abgas einer Brennkraftmaschine ist und der Gaseintritt der inneren Schutzhülse (21) auf axialer Höhe des Sensorelements (14) angeordnet ist, wobei auf dem Sensorelement (14) ein sensitiver Bereich angeordnet ist, wobei das Sensorelement (14) als planares Sensorelement (14) ausgebildet ist und lediglich auf einem Teil einer Seitenfläche des Sensorelements (14) der sensitive Bereich angeordnet ist, und der Gaseintritt der inneren Schutzhülse (21) lediglich auf einem radialen und/oder axialen Teilbereich der inneren Schutzhülse (21) angeordnet ist und der sensitive Bereich und der Gaseintritt der inneren Schutzhülse (21) einander gegenüberliegend sind, sodass in das Innere der inneren Schutzhülse (21) eintretendes Abgas den sensitiven Bereich stets unmittelbar anströmt und der sensitive Bereich des Sensorelements (14) eine Interdigital-Elektrodenstruktur (142) ist.

2. Abgassensor nach Anspruch 1, **dadurch gekennzeichnet, dass** der Gasaustritt der äußeren Schutzhülse (22) zumindest eine Gasaustrittsöffnung (224) aufweist, in der die innere Schutzhülse (21) fixiert ist und durch die hindurch die innere Schutzhülse (21) abgasseitig über die äußere Schutzhülse (22) übersteht, und der Gasaustritt der inneren Schutzhülse (21) das Innere der inneren Schutzhülse (21) mit einem Bereich außerhalb des Abgassensors (1) unmittelbar verbindet.

3. Abgassensor nach Anspruch 1, **dadurch gekennzeichnet, dass** die äußere Schutzhülse (22) axial in abgasseitiger Richtung über die innere Schutzhülse (21) übersteht und zwischen der äußeren Schutzhülse (22) und der inneren Schutzhülse (21) ein von dem ringförmigen Raum (30) getrennter Stirnraum (32) ausgebildet ist, und der Gasaustritt der inneren Schutzhülse das Innere der inneren Schutzhülse (21) mit dem Stirnraum (32) verbindet und der Gasaustritt der äußeren Schutzhülse den Stirnraum (32) mit einem Bereich außerhalb des Abgassensors (1) verbindet.

4. Abgassensor nach einem der Ansprüche 1 bis 3, **dadurch gekennzeichnet, dass** der Gaseintritt der äußeren Schutzhülse (22) mindestens eine Gaseintrittsöffnung (222) aufweist, die mit mindestens einem Drallelement (223) versehen ist, dass ein in den ringförmigen Raum (30) eintretendes Abgas so ablenkt, dass es innerhalb des ringförmigen Raums (30) um die innere Schutzhülse (21) rotiert.

5. Abgassensor nach einem der Ansprüche 1 oder 4, **dadurch gekennzeichnet, dass** der Gaseintritt der inneren Schutzhülse (21) mindestens eine Gaseintrittsöffnung (212) aufweist, die mindestens ein Umlenkelement (215) aufweist, das ein in den ringförmigen Raum (30) eintretendes Abgas in Richtung des Gasaustritts der inneren Schutzhülse (21) hin ablenkt.

6. Abgassensor nach einem der Ansprüche 1 bis 5, **dadurch gekennzeichnet, dass** der Gaseintritt der inneren Schutzhülse (21) aus einer Vielzahl von Gaseintrittsöffnungen (212) besteht, insbesondere aus mindestens 8 oder mindestens 10 Gaseintrittsöffnungen (212) besteht, von denen jede einzelne Gaseintrittsöffnung (212) einen Strömungsquerschnitt aufweist, dessen Quadratwurzel kleiner als 1/18 der Längserstreckung des Schutzrohrs (20) ist und/oder kleiner als 1/35 der Längserstreckung des Sensorelements (14) ist, beispielsweise mit einem Strömungsquerschnitt von nicht mehr als 1mm².

7. Abgassensor nach einem der Ansprüche 1 bis 6, **dadurch gekennzeichnet, dass** der Gaseintritt der inneren Schutzhülse (21) aus einer Vielzahl von Gaseintrittsöffnungen (212) besteht, die in Längsrichtung übereinander angeordnet sind, insbesondere lediglich in einer Reihe oder in zwei nebeneinander angeordneten Reihen.

8. Abgassensor nach einem der Ansprüche 1 bis 7, **dadurch gekennzeichnet, dass** der Gaseintritt der inneren Schutzhülse (21) aus einer Vielzahl von Gaseintrittsöffnungen (212) besteht, die in Umfangsrichtung nebeneinander angeordnet sind, insbesondere lediglich in einer Reihe oder in zwei oder mehr übereinander angeordneten Reihen.

9. Abgassensor nach einem der Ansprüche 1 bis 8, **dadurch gekennzeichnet, dass** der Gaseintritt der inneren Schutzhülse (21) einen Strömungsquerschnitt aufweist, der 10% bis 95%, insbesondere 25% bis 50% oder 50% bis 80%, des Strömungsquerschnitts des Gasaustritts der inneren Schutzhülse (21) beträgt, und/oder 10% bis 95%, insbesondere 25% bis 50% oder 50% bis 80%, des Strömungsquerschnitts des Gasaustritts der äußeren Schutzhülse (22) beträgt.

10. Verwendung eines Abgassensors (1) nach einem der Ansprüche 1 bis 9 in einer Abgasleitung (50) einer Brennkraftmaschine, **dadurch gekennzeichnet, dass** ein Querschnitt der Abgasleitung (50) einen zentraleren Bereich (53) und einen periphereren Bereich (52) aufweist, der den zentraleren Bereich (53) umgibt, wobei eine Strömungsgeschwindigkeit des Abgases in der Abgasleitung (50) in dem zentraleren Bereich (53) grundsätzlich höher ist als in dem periphereren Bereich (52) und wobei der Gaseintritt der äußeren Schutzhülse (22) in dem periphereren Bereich (52) angeordnet ist und der Gasaustritt der inneren oder der äußeren Schutzhülse (21, 22) in dem zentraleren Bereich (53) angeordnet ist.

## Claims

1. Exhaust gas sensor comprising a sleeve-like sensor housing (12), a sensor element (14) which is fixed in the sensor housing (12) and which protrudes beyond the sensor housing (12) on the exhaust gas side, and a sleeve-like protective tube (20) which is fastened on the sensor housing (12) on the exhaust gas side, wherein the protective tube (20) consists of an inner protective sleeve (21) and an outer protective sleeve (22), wherein the inner protective sleeve (21) surrounds an exhaust gas-side end region (141) of the sensor element (14), wherein the outer protective sleeve (22) surrounds the inner protective sleeve (21) at least in regions, so that an annular space (30) is formed between the outer protective sleeve (22) and the inner protective sleeve (21), wherein the outer protective sleeve (22) and the inner protective sleeve (21) each have a gas outlet and a gas inlet, and flow through the protective tube (20) in the case of a negative gradient, facing in the axial direction, of the static pressure in the exhaust gas, that is to say when the static pressure at the exhaust gas-side axial end of the protective tube (20) is lower than at the axial end of the protective tube (20) facing away from the exhaust gas, the protective tube (20) necessarily takes place from the gas inlet of the outer protective sleeve (22) into the annular space (30), from there through the gas inlet of the inner protective sleeve (21) into the interior of the inner protective housing (21) and from there through the gas outlets of the outer and the inner protective sleeve (21, 22), wherein the gas inlet of the inner protective sleeve (21) forms the smallest flow cross section during flow through the protective tube (20) and wherein the exhaust gas sensor is a particle sensor for determining the concentration of soot in the exhaust gas of an internal combustion engine and the gas inlet of the inner protective sleeve (21) is arranged at the axial height of the sensor element (14), wherein a sensitive region is arranged on the sensor element (14), wherein the sensor element (14) is designed as a planar sensor element (14) and the sensitive region is arranged only on a portion of a side face of the sensor element (14), and the gas inlet of the inner protective sleeve (21) is arranged only on a radial and/or axial subregion of the inner protective sleeve (21), and the sensitive region and the gas inlet of the inner protective sleeve (21) are situated opposite each other, so that exhaust gas entering the interior of the inner protective sleeve (21) always flows directly against the sensitive region and the sensitive region of the sensor element (14) is an interdigital electrode structure (142).

2. Exhaust gas sensor according to Claim 1, **characterized in that** the gas outlet of the outer protective sleeve (22) has at least one gas outlet opening (224) in which the inner protective sleeve (21) is fixed and through which the inner protective sleeve (21) protrudes beyond the outer protective sleeve (22) on the exhaust gas side, and the gas outlet of the inner protective sleeve (21) directly connects the interior of the inner protective sleeve (21) to a region outside the exhaust gas sensor (1).

3. Exhaust gas sensor according to Claim 1, **characterized in that** the outer protective sleeve (22) projects axially beyond the inner protective sleeve (21) in the exhaust gas-side direction and an end space (32), which is separate from the annular space (30), is formed between the outer protective sleeve (22) and the inner protective sleeve (21), and the gas outlet of the inner protective sleeve connects the interior of the inner protective sleeve (21) to the end space (32) and the gas outlet of the outer protective sleeve connects the end space (32) to a region outside the exhaust gas sensor (1) .

4. Exhaust gas sensor according to any of Claims 1 to 3, **characterized in that** the gas inlet of the outer protective sleeve (22) has at least one gas inlet opening (222) which is provided with at least one swirl element (223) which deflects an exhaust gas entering the annular space (30) such that it rotates about the inner protective sleeve (21) within the annular space (30).

5. Exhaust gas sensor according to either of Claims 1 and 4, **characterized in that** the gas inlet of the inner protective sleeve (21) has at least one gas inlet opening (212) which has at least one deflection element (215) which deflects an exhaust gas entering the annular space (30) in the direction of the gas outlet of the inner protective sleeve (21).

6. Exhaust gas sensor according to any of Claims 1 to 5, **characterized in that** the gas inlet of the inner protective sleeve (21) consists of a large number of gas inlet openings (212), in particular of at least 8 or at least 10 gas inlet openings (212), each individual gas inlet opening (212) of which has a flow cross section of which the square root is less than 1/18 of the longitudinal extent of the protective tube (20) and/or is less than 1/35 of the longitudinal extent of the sensor element (14), for example having a flow cross section of not more than 1 mm².

7. Exhaust gas sensor according to one of Claims 1 to 6, **characterized in that** the gas inlet of the inner protective sleeve (21) consists of a large number of gas inlet openings (212) which are arranged one above the other in the longitudinal direction, in particular only in one row or in two rows which are arranged next to each other.

8. Exhaust gas sensor according to one of Claims 1 to 7, **characterized in that** the gas inlet of the inner protective sleeve (21) consists of a large number of gas inlet openings (212) which are arranged next to each other in the circumferential direction, in particular only in one row or in two or more rows which are arranged one above the other.

9. Exhaust gas sensor according to any of Claims 1 to 8, **characterized in that** the gas inlet of the inner protective sleeve (21) has a flow cross section which is 10% to 95%, in particular 25% to 50% or 50% to 80%, of the flow cross section of the gas outlet of the inner protective sleeve (21), and/or 10% to 95%, in particular 25% to 50% or 50% to 80%, of the flow cross section of the gas outlet of the outer protective sleeve (22).

10. Use of an exhaust gas sensor (1) according to any of Claims 1 to 9 in an exhaust gas line (50) of an internal combustion engine, **characterized in that** a cross section of the exhaust gas line (50) has a relatively central region (53) and a relatively peripheral region (52) which surrounds the relatively central region (53), wherein a flow rate of the exhaust gas in the exhaust gas line (50) is, in principle, higher in the relatively central region (53) than in the relatively peripheral region (52) and wherein the gas inlet of the outer protective sleeve (22) is arranged in the relatively peripheral region (52) and the gas outlet of the inner or the outer protective sleeve (21, 22) is arranged in the relatively central region (53).

## Revendications

1. Capteur de gaz d'échappement, comprenant un boîtier de capteur (12) en forme de manchon, un élément capteur (14) fixé dans le boîtier de capteur (12) et faisant saillie au-delà du boîtier de capteur (12) côté gaz d'échappement, et un tube de protection (20) en forme de manchon qui est fixé au boîtier de capteur (12) côté gaz d'échappement, dans lequel le tube de protection (20) est composé d'un manchon de protection interne (21) et d'un manchon de protection externe (22), dans lequel le manchon de protection interne (21) entoure une zone d'extrémité (141) côté gaz d'échappement de l'élément capteur (14), dans lequel le manchon de protection externe (22) entoure le manchon de protection interne (21) au moins par endroits de façon à réaliser un espace annulaire (30) entre le manchon de protection externe (22) et le manchon de protection interne (21), dans lequel le manchon de protection externe (22) et le manchon de protection interne (21) présentent respectivement une sortie de gaz et une entrée de gaz, et un passage par le tube de protection (20), dans le cas d'un gradient négatif, orienté dans la direction axiale, de la pression statique dans les gaz d'échappement, donc si la pression statique à l'extrémité axiale côté gaz d'échappement du tube de protection (20) est inférieure à celle à l'extrémité axiale, détournée des gaz d'échappement, du tube de protection (20), le tube de protection (20) a lieu forcément depuis l'entrée de gaz du manchon de protection externe (22) dans l'espace annulaire (30), de là à travers l'entrée de gaz du manchon de protection interne (21) vers l'intérieur du manchon de protection interne (21), et de là à travers les sorties de gaz du manchon extérieur et du manchon intérieur (21, 22), dans lequel l'entrée de gaz du manchon de protection interne (21) forme la plus petite section transversale d'écoulement lors du passage par le tube de protection (20), et dans lequel le capteur de gaz d'échappement est un capteur de particules pour déterminer la concentration en suie dans les gaz d'échappement d'un moteur à combustion interne, et l'entrée de gaz du manchon de protection interne (21) est disposée à la hauteur axiale de l'élément capteur (14), dans lequel une zone sensible est disposée sur l'élément capteur (14), dans lequel l'élément capteur (14) est réalisé sous forme d'élément capteur plan (14), et la zone sensible n'est disposée que sur une partie d'une surface latérale de l'élément capteur (14), et l'entrée de gaz du manchon de protection interne (21) n'est disposée que sur une zone partielle radiale et/ou axiale du manchon de protection interne (21), et la zone sensible et l'entrée de gaz du manchon de protection interne (21) sont opposées l'une à l'autre de sorte que des gaz d'échappement entrant à l'intérieur du manchon de protection interne (21) atteignent toujours directement la zone sensible, et la zone sensible de l'élément capteur (14) est une structure d'électrodes interdigitées (142).

2. Capteur de gaz d'échappement selon la revendication 1, **caractérisé en ce que** la sortie de gaz du manchon de protection externe (22) présente au moins une ouverture de sortie de gaz (224) dans laquelle est fixé le manchon de protection interne (21) et à travers laquelle le manchon de protection interne (21) dépasse du manchon de protection externe (22) côté gaz d'échappement, et la sortie de gaz du manchon de protection interne (21) relie directement l'intérieur du manchon de protection interne (21) à une zone à l'extérieur du capteur de gaz d'échappement (1).

3. Capteur de gaz d'échappement selon la revendication 1, **caractérisé en ce que** le manchon de protection externe (22) dépasse axialement dans la direction côté gaz d'échappement du manchon de protection interne (21), et un espace frontal (32), séparé de l'espace annulaire (30), est réalisé entre le manchon de protection externe (22) et le manchon de protection interne (21), et la sortie de gaz du manchon de protection interne relie l'intérieur du manchon de protection interne (21) à l'espace frontal (32) et la sortie de gaz du manchon de protection externe relie l'espace frontal (32) à une zone à l'extérieur du capteur de gaz d'échappement (1).

4. Capteur de gaz d'échappement selon l'une quelconque des revendications 1 à 3, **caractérisé en ce que** l'entrée de gaz du manchon de protection externe (22) présente au moins une ouverture d'entrée de gaz (222) qui est munie d'au moins un élément de turbulence (223) qui dévie des gaz d'échappement entrant dans l'espace annulaire (30) de telle sorte qu'à l'intérieur de l'espace annulaire (30), ils tournent autour du manchon de protection interne (21).

5. Capteur de gaz d'échappement selon l'une quelconque des revendications 1 ou 4, **caractérisé en ce que** l'entrée de gaz du manchon de protection interne (21) présente au moins une ouverture d'entrée de gaz (212) qui présente au moins un élément déflecteur (215) qui dévie des gaz d'échappement entrant dans l'espace annulaire (30) en direction de la sortie de gaz du manchon de protection interne (21).

6. Capteur de gaz d'échappement selon l'une quelconque des revendications 1 à 5, **caractérisé en ce que** l'entrée de gaz du manchon de protection interne (21) est composée d'une pluralité d'ouvertures d'entrée de gaz (212), en particulier d'au moins 8 ou d'au moins 10 ouvertures d'entrée de gaz (212), dont chaque ouverture d'entrée de gaz (212) individuelle présente une section transversale d'écoulement dont la racine carrée est inférieure à 1/18 de la dimension longitudinale du tube de protection (20) et/ou est inférieure à 1/35 de la dimension longitudinale de l'élément capteur (14), par exemple avec une section transversale d'écoulement ne dépassant pas 1 mm².

7. Capteur de gaz d'échappement selon l'une quelconque des revendications 1 à 6, **caractérisé en ce que** l'entrée de gaz du manchon de protection interne (21) est composée d'une pluralité d'ouvertures d'entrée de gaz (212) qui sont disposées les unes au-dessus des autres dans la direction longitudinale, en particulier sur une seule rangée ou sur deux rangées disposées l'une à côté de l'autre.

8. Capteur de gaz d'échappement selon l'une quelconque des revendications 1 à 7, **caractérisé en ce que** l'entrée de gaz du manchon de protection interne (21) est composée d'une pluralité d'ouvertures d'entrée de gaz (212) qui sont disposées les unes à côté des autres dans la direction circonférentielle, en particulier sur une seule rangée ou sur deux ou plusieurs rangées disposées les unes au-dessus des autres.

9. Capteur de gaz d'échappement selon l'une quelconque des revendications 1 à 8, **caractérisé en ce que** l'entrée de gaz du manchon de protection interne (21) présente une section transversale d'écoulement qui est de 10 % à 95 %, en particulier de 25 % à 50 % ou de 50 % à 80 %, de la section transversale d'écoulement de la sortie de gaz du manchon de protection interne (21), et/ou est de 10 % à 95 %, en particulier de 25 % à 50 % ou de 50 % à 80 % de la section transversale d'écoulement de la sortie de gaz du manchon de protection externe (22).

10. Utilisation d'un capteur de gaz d'échappement (1) selon l'une quelconque des revendications 1 à 9 dans une conduite de gaz d'échappement (50) d'un moteur à combustion interne, **caractérisée en ce qu'**une section transversale de la conduite de gaz d'échappement (50) présente une zone plutôt centrale (53) et une zone plutôt périphérique (52) qui entoure la zone plutôt centrale (53), et dans laquelle une vitesse d'écoulement des gaz d'échappement dans la conduite de gaz d'échappement (50) dans la zone plutôt centrale (53) est en principe supérieure à celle dans la zone plutôt périphérique (52), et dans laquelle l'entrée de gaz du manchon de protection externe (22) est disposée dans la zone plutôt périphérique (52) et la sortie de gaz du manchon de protection interne ou externe (21, 22) est disposée dans la zone plutôt centrale (53).
